# EUROPEAN PATENT APPLICATION

(11) **EP 4 832 541 A1**
(43) Date of publication of application: **28.10.2026**
(21) Application number: 23962134.5
(22) Date of filing: 18.12.2023
(51) Int. Cl.: H04W 16/26, H04B 7/145, H04W 4/38

(54) **RELAY DEVICE, WIRELESS SYSTEM, AND RELAY METHOD**

(71) Applicant: NTT DOCOMO, INC., Tokyo 100-6150 (JP)
(72) Inventor: ONODA, Takanobu, Tokyo 100-6150 (JP); KURITA, Daisuke, Tokyo 100-6150 (JP); HARADA, Hiroki, Tokyo 100-6150 (JP); WANG, Fan, Beijing 100190 (CN); HOU, Xiaolin, Beijing 100190 (CN); LI, Xiang, Beijing 100190 (CN); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2023/045376
(87) International publication number: WO 2025/134211

(57) **Abstract**

This relay device is provided with: a control unit for setting switching between a first mode for sensing a sensing region and a second mode for transmitting a signal from a transmission device to a reception device; and an antenna unit for transferring a signal on the basis of the mode set by the control unit.

## Description

### Technical Field

The present disclosure relates to a relay apparatus, a radio system, and a relay method.

### Background Art

The 3rd Generation Partnership Project (3GPP) has standardized the 5th generation mobile communication system (also referred to as 5G, New Radio (NR), or Next Generation (NG)) and is further standardizing a next generation system called Beyond 5G, 5G Evolution, or 6G.

In NR, in addition to a user terminal (may be referred to as user equipment (UE) or simply a terminal) and a radio base station (may be simply referred to as a base station), the introduction of a radio apparatus, such as a reconfigurable intelligent surface (RIS), is being considered to achieve a higher data rate and to extend a range of a coverage (e.g., see Patent Literature (hereinafter, referred to as PTL) 1). Further, in NR, it is considered that a radio apparatus such as an RIS aids sensing.

### Citation List

### Patent Literature

PTL 1
WO 2022/151016

### Summary of Invention

However, there is room for consideration of a method in which a radio apparatus that is being considered for introduction efficiently aids sensing.

An aspect of the present disclosure provides a relay apparatus, a radio system, and a relay method each capable of efficiently aiding sensing.

### Solution to Problem

A relay apparatus according to one aspect of the present disclosure includes: a control section that performs a configuration of switching between a first mode in which sensing is performed on a sensing region and a second mode in which a signal is transmitted from a transmission apparatus to a reception apparatus; and an antenna section that forwards a signal based on a mode of the configuration performed by the control section.

### Brief Description of Drawings

FIG. 1 is a diagram illustrating an example of a radio communication system according to an embodiment of the present disclosure;
FIG. 2A is a diagram illustrating an example of a distant user in a high frequency band;
FIG. 2B is a diagram illustrating an example of a non-line of sight user in a high frequency band;
FIG. 3A is a diagram illustrating an example of communication using a configuration of an NCR;
FIG. 3B is a diagram illustrating an example of communication using an RIS;
FIG. 4 is a diagram illustrating an example of a system architecture including the RIS;
FIG. 5 is a diagram illustrating an example of a near field (NF) and a far field (FF) of the RIS;
FIG. 6A is a diagram illustrating an example of DFT-based beamforming (BF);
FIG. 6B is a diagram illustrating an example of beamfocusing with an optimal phase;
FIG. 6C is a diagram illustrating an example of beamfocusing with a steering vector of a near field (NF);
FIG. 7 is a diagram illustrating an example of SSB forwarding with the RIS applied;
FIG. 8 is a diagram illustrating an example of a precoder according to Example 1-1-1;
FIG. 9 is a diagram illustrating an example of a reference point;
FIG. 10 is a diagram illustrating an example of a precoder according to Example 1-1-2;
FIG. 11 is a diagram illustrating an example of a uniform grid in Cartesian coordinates;
FIG. 12 is a diagram illustrating an example of active imaging and passive imaging;
FIG. 13 is a diagram illustrating types of active imaging and passive imaging;
FIG. 14 is a diagram illustrating a comparison of active imaging;
FIG. 15 is a diagram illustrating a configuration example of a phased array system;
FIG. 16 is a diagram illustrating a configuration example of SAR;
FIG. 17 is a diagram illustrating an overview of an RIS aided wireless sensing system;
FIG. 18 is a diagram illustrating an exemplary system model of an RIS aided wireless imaging system;
FIG. 19 is a diagram illustrating an exemplary back-projection algorithm;
FIG. 20A is a diagram illustrating an exemplary system in which reception and transmission are separated;
FIG. 20B is a diagram illustrating an exemplary system in which reception and transmission are integrated;
FIG. 21 is a comparative diagram of characteristics of a system in which reception and transmission are separated and a system in which reception and transmission are integrated;
FIG. 22A is a diagram illustrating an exemplary grid division;
FIG. 22B is a diagram illustrating an exemplary grid division;
FIG. 23 is a diagram illustrating an example of an imaging result in grid division;
FIG. 24A is a diagram illustrating an example of switching of a mode based on periodic indications to a system including an RIS;
FIG. 24B is a diagram illustrating an example of switching of a mode based on an indication triggered to a system including an RIS;
FIG. 25 is a diagram illustrating an example of wireless imaging;
FIG. 26 is a diagram illustrating a relationship between the number of bits of quantization of a phase shift and an imaging result;
FIG. 27 is a diagram illustrating an imaging result at different focal planes;
FIG. 28 is a table illustrating an exemplary opening size;
FIG. 29A is a diagram illustrating an example of an overview of a system of Case 1 of installation;
FIG. 29B is a sequence diagram illustrating an exchange of signals of Option 1 of Case 1 of installation illustrated in FIG. 29A;
FIG. 29C is a sequence diagram illustrating an exchange of signals of Option 2 of Case 1 of installation illustrated in FIG. 29A;
FIG. 30A is a diagram illustrating an example of an overview of a system of Case 2 of installation;
FIG. 30B is a sequence diagram illustrating a flow of signals of Case 2 of installation illustrated in FIG. 30A;
FIG. 31A is a diagram illustrating an example of an overview of a system of Case 3 of installation;
FIG. 31B is a sequence diagram illustrating a flow of signals of Case 3 of installation illustrated in FIG. 31A;
FIG. 32A is a diagram illustrating an example of an overview of a system of Case 4 of installation;
FIG. 32B is a sequence diagram illustrating a flow of signals of Case 4 of the installation illustrated in FIG. 32A; and
FIG. 33 is a diagram illustrating an example of a uniform grid RTC.
FIG. 34 is a block diagram illustrating a configuration example of a base station according to an embodiment of the present disclosure;
FIG. 35 is a block diagram illustrating a configuration example of a terminal according to the embodiment of the present disclosure;
FIG. 36 is a block diagram illustrating a configuration example of a radio apparatus according to the embodiment of the present disclosure;
FIG. 37 is a diagram illustrating an example of a hardware configuration of the base station, the terminal, and the radio apparatus according to the embodiment of the present disclosure; and
FIG. 38 is a diagram illustrating an exemplary configuration of a vehicle.

### Description of Embodiments

Hereinafter, embodiments according to an aspect of the present disclosure will be described with reference to the accompanying drawings. Note that the embodiments described below are merely examples, and the embodiments to which the present disclosure is applied are not limited to the following embodiments.

Existing techniques are used as appropriate for operations of a radio communication system in an embodiment of the present disclosure. Note that the existing technology is, for example, existing LTE or existing NR, but is not limited to existing LTE or NR.

Terms used in existing LTE or NR, such as a synchronization signal (SS), a primary SS (PSS), a secondary SS (SSS), a physical broadcast channel (PBCH), a physical random access channel (PRACH), a physical downlink control channel (PDCCH), a physical downlink shared channel (PDSCH), a physical uplink control channel (PUCCH), and a physical uplink shared channel (PUSCH), are used in an embodiment of the present disclosure described below. This is for the sake of convenience in description, and the same signals, functions, and the like may be called by other names. Further, the above terms in NR correspond to NR-SS, NR-PSS, NR-SSS, NR-PBCH, NR-PRACH, and the like. Note that, even though the signal used in NR, it is not necessarily explicitly referred to as "NR-".

Further, in an embodiment of the present disclosure, the duplex method may be a time division duplex (TDD) method, a frequency division duplex (FDD) method, or another method (e.g., a flexible duplex method).

Furthermore, in an embodiment of the present disclosure, the term "configured" with respect to a radio parameter or the like may refer to a predetermined value being preconfigured, or it may refer to a radio parameter indicated from a base station or a terminal being configured.

### <Radio Communication System>

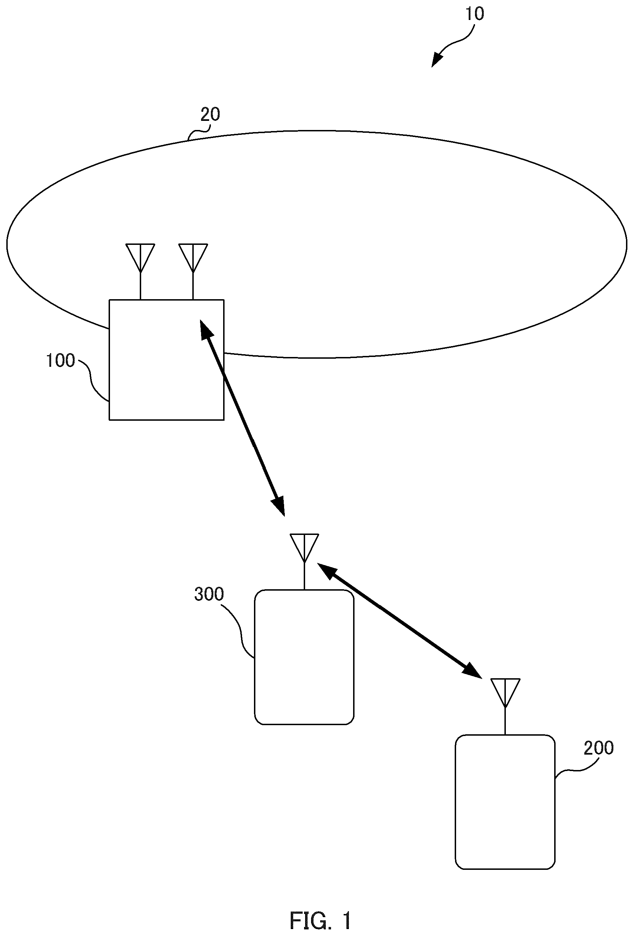

FIG. 1 is a diagram illustrating an example of radio communication system 10 according to an embodiment of the present disclosure. Radio communication system 10 is a radio communication system conforming to 5G NR or 6G NR, and includes next generation-radio access network 20 (hereinafter, referred to as NG-RAN 20) and terminal 200 (hereinafter, also referred to as user equipment (UE) 200).

Note that radio communication system 10 may be a radio communication system conforming to a system called Beyond 5G, 5G Evolution, or 6G.

NG-RAN 20 includes base station 100 (hereinafter also referred to as gNB 100). Note that the numbers of gNBs and UEs are not limited to the example illustrated in FIG. 1.

NG-RAN 20 actually includes a plurality of NG-RAN nodes, specifically gNBs (or ng-eNBs), and is connected to a core network conforming to 5G or 6G. Note that NG-RAN 20 and the core network may be simply referred to as a "network." Further, in the following, the gNB may be read as a network (NW).

gNB 100 is, for example, a base station conforming to 5G or 6G, and performs radio communication conforming to 5G or 6G with UE 200.

Further, in the example illustrated in FIG. 1, radio apparatus 300 that forwards signals is illustrated between gNB 100 and UE 200. In the following, radio apparatus 300 may be referred to as a reconfigurable intelligent surface (RIS).

Radio apparatus 300 performs a forwarding operation of forwarding a signal transmitted from gNB 100 toward UE 200, for example. Radio apparatus 300 may also perform a forwarding operation of forwarding a signal transmitted from UE 200 toward gNB 100. The "forwarding (forward)" may be replaced with "relaying". Further, the "operation" may be replaced with "processing," "control," or the like. Further, the RIS, which is an example of radio apparatus 300 being considered in NR, will be described later.

gNB 100 and UE 200 may controls radio signals transmitted from a plurality of antenna elements to handle Massive Multiple Input Multiple Output (MIMO) for generating a beam having a higher directivity, carrier aggregation (CA) using a plurality of component carriers (CCs) bundled together, dual connectivity (DC) for performing communication between UE and each of two NG-RAN nodes simultaneously, and the like.

Further, radio communication system 10 may support a plurality of frequency ranges (FRs). Radio communication system 10 may support FR1 and FR2. The frequency bands of respective FRs are as follows, for example.
- FR1: 410 MHz to 7.125 GHz
- FR2: 24.25 GHz to 52.6 GHz

In FR1, a sub-carrier spacing (SCS) of 15 kHz, 30 kHz, or 60 kHz may be used, and a bandwidth (BW) of 5 to 100 MHz may be used. FR2 is a higher frequency than FR1, and SCS of 60 kHz or 120 kHz (240 kHz may be included) may be used, and a bandwidth (BW) of 50 to 400 MHz may be used.

Note that, the SCS may be interpreted as numerology. The numerology is defined in 3GPP TS 38.300 and corresponds to one subcarrier spacing in a frequency domain.

Further, radio communication system 10 may support a frequency band higher than the frequency band of the FR2. Specifically, radio communication system 10 may support a frequency band of above 52.6 GHz to 114.25 GHz. Such a high frequency band may be referred to as "FR2x" for convenience. In a case where a band above 52.6 GHz is used, Cyclic Prefix-Orthogonal Frequency Division Multiplexing (CP-OFDM)/Discrete Fourier Transform-Spread-Orthogonal Frequency Division Multiplexing (DFT-S-OFDM) having a larger SCS may be applied.

The time direction (t) may be referred to as a time domain, a symbol period, a symbol time, or the like. Further, the frequency direction may be referred to as a frequency domain, a resource block, a subcarrier, a bandwidth part (BWP), or the like.

gNB 100 transmits control information, configuration information, and the like of gNB 100 to UE 200 as a downlink (DL) signal.

Further, for example, gNB 100 receives, as an uplink (UL) signal, control information, a data signal, information on the processing capability of UE 200 (terminal capability (information); for example, UE capability), and the like from UE 200.

Radio apparatus 300 performs a forwarding operation of forwarding a DL signal to UE 200. Radio apparatus 300 performs a forwarding operation of forwarding a UL signal to gNB 100. Note that, in the following, the UL signal received by gNB 100 from UE 200 and/or the DL signal received by UE 200 from gNB 100 may be a signal forwarded by radio apparatus 300.

UE 200 is a communication apparatus with a radio communication function, such as a smartphone, a mobile phone, a tablet, a wearable terminal, and a communication module for Machine-to-Machine (M2M).

UE 200 receives a control signal or a data signal from gNB 100 in DL and transmits a control signal or a data signal to gNB 100 in UL, thereby utilizing various communication services provided by radio communication system 10. Further, UE 200 receives various reference signals transmitted from gNB 100 and performs measurement of the propagation path quality based on a reception result of the reference signals.

The channel used for DL signal transmission includes, for example, a data channel and a control channel. For example, the data channel may include a Physical Downlink Shared Channel (PDSCH), and the control channel may include a Physical Downlink Control Channel (PDCCH). For example, gNB 100 transmits control information to UE 200 using PDCCH and transmits a DL data signal using PDSCH. Note that the PDSCH is an example of a downlink shared channel, and the PDCCH is an example of a downlink control channel. Note that the PDCCH may be read as downlink control information (DCI), control information, or the like transmitted in the PDCCH.

The reference signal included in a DL signal may include, for example, at least one of a Demodulation Reference Signal (DMRS), a Phase Tracking Reference Signal (PTRS), a Channel State Information-Reference Signal (CSI-RS), a Sounding Reference Signal (SRS), and a Positioning Reference Signal (PRS) for position information. For example, the reference signal such as the DMRS and the PTRS is used for demodulation of a DL data signal and is transmitted using the PDSCH.

The channel used for UL signal transmission includes, for example, a data channel and a control channel. For example, the data channel may include a Physical Uplink Shared Channel (PUSCH), and the control channel may include a Physical Uplink Control Channel (PUCCH). For example, UE 200 transmits control information using PUCCH and transmits a UL data signal using PUSCH. Note that the PUSCH is an example of an uplink shared channel, and the PUCCH is an example of an uplink control channel. The shared channel may also be referred to as a data channel. Note that the PUSCH or the PUCCH may be read as uplink control information (UCI), control information, or the like transmitted in the PUSCH or the PUCCH.

The reference signal included in a UL signal may include, for example, at least one of the DMRS, the PTRS, the CSI-RS, the SRSRS, and the PRS for positional information. For example, the reference signal such as the DMRS and the PTRS is used for demodulating a UL data signal and is transmitted using the PUSCH.

### <Use of Sub-Terahertz Waves>

In a future radio communication system (e.g., 6G and thereafter), strict requirements are introduced with respect to capacity, coverage, power consumption, and other aspects. Studies have been conducted for realizing a data rate of 100 Gbps while maintaining sufficient coverage by using a band (spectrum) of sub-terahertz (e.g., 100 GHz to 300 GHz) that is a higher frequency band than the existing systems (e.g., NR Rel. 15/16/17).

In the studies, a transmission method of line of sight (LOS)-Multi Input Multi Output (MIMO) suitable for an access link is considered to be designed with 100 GHz, 100 Gbps, and (coverage of) 100 m as a target.

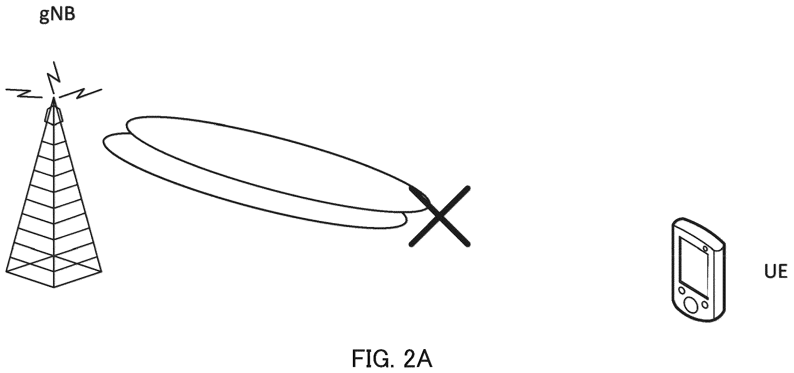

FIG. 2A is a diagram illustrating an example of a distant user in a high frequency band. In the example illustrated in FIG. 2A, orthonormal transmission cannot be performed because of a restriction on the size of a base station (BS) for mega MIMO for distant users.

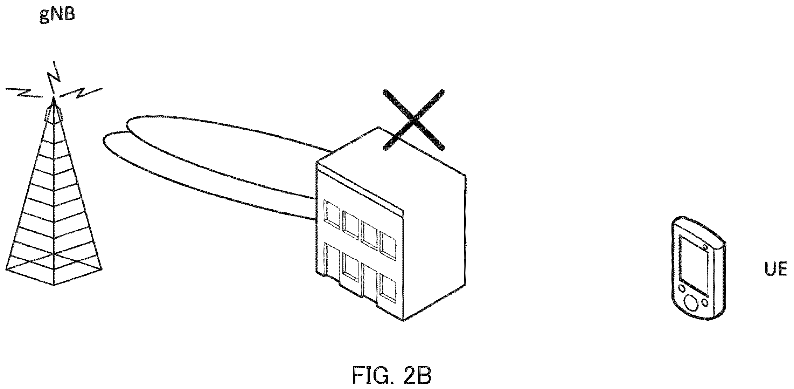

FIG. 2B is a diagram illustrating an example of a non-line of sight (NLOS) user in a high frequency band. For NLOS users, efficient LOS-MIMO transmission cannot be performed due to blocking (e.g., a building).

The LOS-MIMO is not supported in MIMO of the existing NR (NR MIMO). In the existing NR, a very large bandwidth is needed to achieve the data rate of 100 Gbps, and it is difficult to secure such a very large bandwidth.

The NR MIMO is designed for an antenna far-field that only supports transmission of rank 1 in each polarization direction in an LOS channel. Multiplexing of rank 2 is possible by using double polarization, but a rank higher than rank 2 cannot be used. In order to achieve 100 Gbps, a bandwidth of several tens of GHz is required, but this is difficult to achieve in a practical system and places a high requirement on an RF component.

A LOS-MIMO scheme that has already been considered is not suitable for the access link because transmission and reception positions need to be fixed, or because a required array size is too large.

Therefore, studies have been conducted on introduction of a fixed large-interval antenna array, an orbital angular momentum (OAM)-MIMO, a mega MIMO utilizing a reconfigurable intelligent surface (RIS) (RIS-aided Mega MIMO), and the like.

The RIS has attracted attention as a new apparatus for network deployment by its flexible and cost-efficient approach, not limited to the example of the sub-terahertz waves described above. The RIS is being considered as a promising technology for achieving a very high data rate and a wide coverage extension in the topology of a 6G radio network. For example, in 3GPP Release 19 (Rel. 19), discussion on the RIS is being advanced.

### <Reconfigurable Intelligent Surface (RIS)>

The RIS relays communication between BS and UE by controlling a reflection angle of at least one of the reflection from a backhaul link toward an access link and the reflection from the access link toward the backhaul link. The RIS is an example of a radio apparatus for performing network deployment in a flexible and cost-efficient approach as compared with a new type of network (NW) node, such as an integrated access and backhaul (IAB), an RF repeater, and a network-controlled repeater (NCR).

The RIS may be configured by a plurality of reconfigurable scattering components. In the following, the scattering component is sometimes referred to as an element or an antenna element.

The RIS may control the direction of a reflected signal, or may control the direction of a transmitted (refracted) signal.

Note that, in the present disclosure, reflection, transmission, and refraction may be replaced with each other. Further, in the present disclosure, reflection, transmission, and refraction of a signal in the RIS may be regarded as the RIS receiving the signal transmitted from a specific direction and transmitting the signal in the same direction as the specific direction, or in a direction different from the specific direction. In this case, the signal transmitted by the RIS may be the same signal as the signal received by the RIS, or may be a signal that has been received by the RIS and has undergone specific processing. Further, the forwarding processing in the RIS in the present disclosure may be regarded as processing in which at least one of reflection, transmission, and refraction occurs in the RIS.

While the NCR amplifies a signal to be relayed, the RIS may not require an RF amplifier. This reduces the power consumption.

The RIS can obtain a beam gain by a narrow beam, but requires an increased number of RIS beams (beams reflected/refracted by the RIS).

The RIS may reflect/refract a signal other than a target frequency.

A material such as a liquid crystal, a metal, and a semiconductor may be used for the RIS. For example, the RIS using the liquid crystal is considered to be unsuitable for the current beam sweep operation due to the beam sweep speed slower than that of the RIS using the semiconductor.

The RIS may be installed on an object, such as a building, considering its thin and flexible shape.

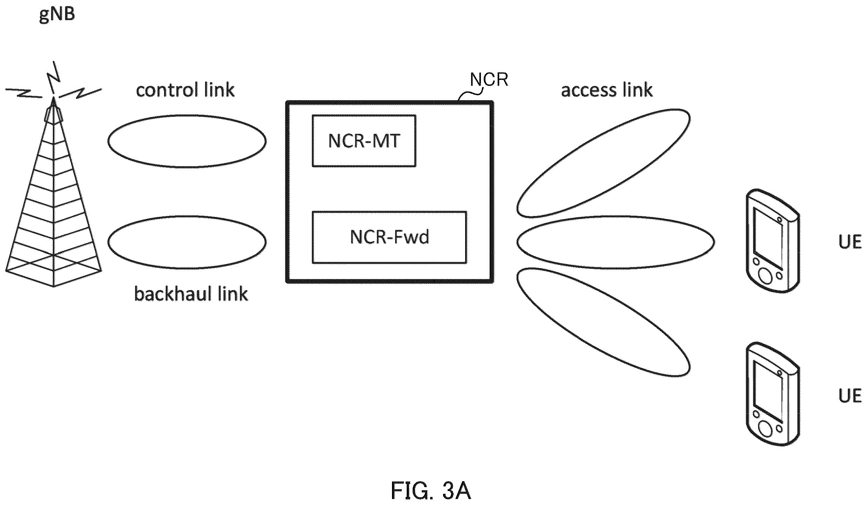

FIG. 3A is a diagram illustrating an example of communication using a configuration of an NCR. The NCR may include an NCR-mobile termination (MT) and an NCR-forwarding (Fwd). The NCR-MT communicates with a BS (gNB) via a control link.

The communication between the NCR-MT and the BS may include at least one of receiving configuration/instruction/control information from the BS and transmitting a request/report/response to the BS. The NCR-Fwd relays communication between the BS and UE by relaying/amplifying a signal from a backhaul link to an access link and relaying/amplifying a signal from the access link to the backhaul link.

Further, in the RIS, a configuration in which communication with a BS (gNB) is performed may be included, as in the NCR. In the RIS, the configuration in which communication with the BS (gNB) is performed may be referred to as RIS-MT. In other words, the RIS may also have RIS-MT and RIS-Fwd, as in the NCR. Further, the RIS-Fwd may be simply referred to as the RIS. In the following description, the operation of the RIS may be regarded as the operation of the RIS-Fwd or the operation of the RIS-MT.

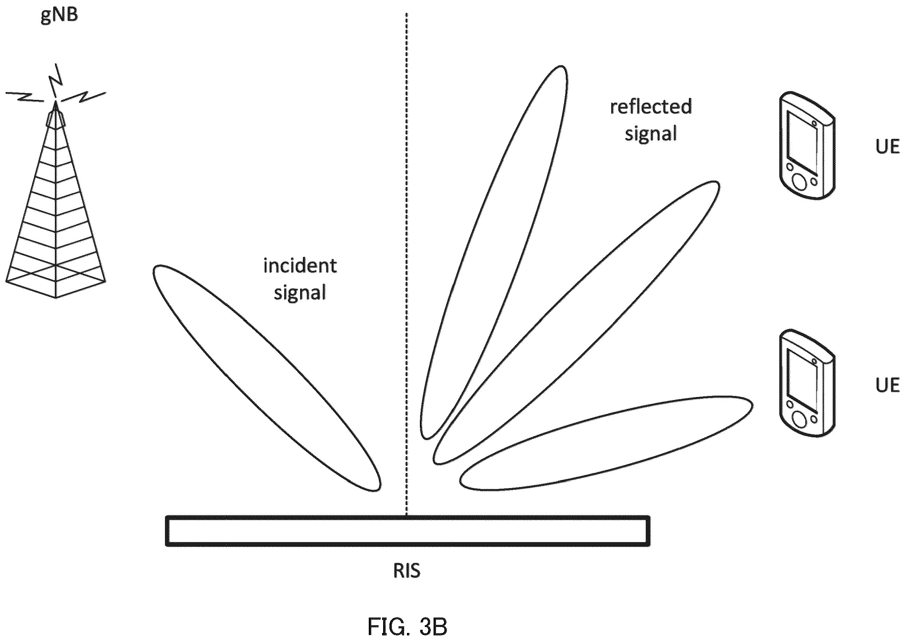

FIG. 3B is a diagram illustrating an example of communication using the RIS. The RIS relays communication between the BS and the UE by controlling a reflection angle of at least one of the reflection from a backhaul link toward an access link and the reflection from the access link toward the backhaul link.

### <System Architecture Including RIS>

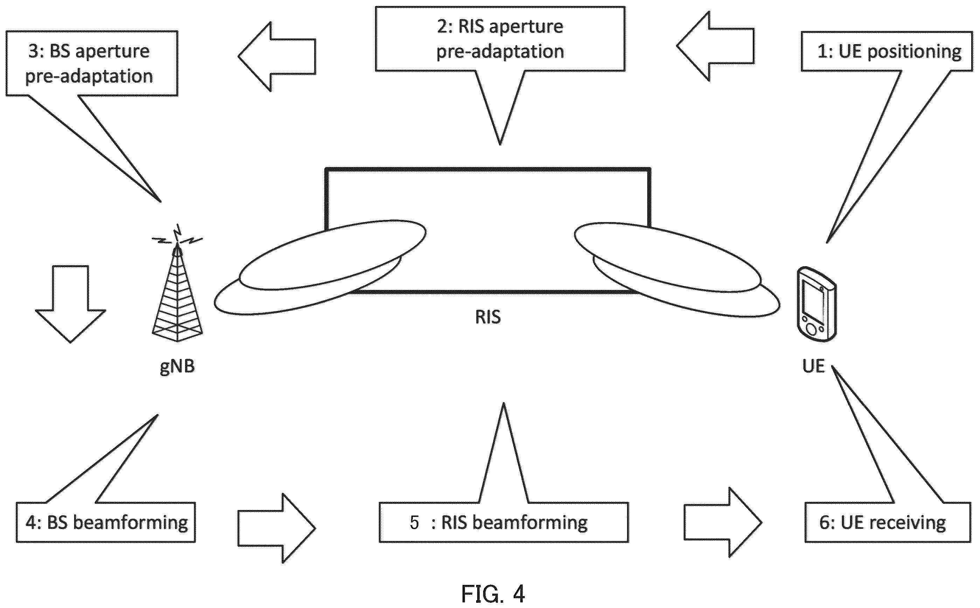

FIG. 4 is a diagram illustrating an example of a system architecture including the RIS. Hereinafter, the system architecture including the RIS will be described with reference to FIG. 4, but this is merely an example.

The system architecture including the RIS may include a plurality of (e.g., two) design phases.

For example, the system architecture including the RIS may include an aperture pre-adaptation phase.

In the aperture pre-adaptation phase, positioning of UE may be performed first. In the positioning of the UE, the UE may report information on the position/attitude of the UE to a network (NW). Further, in the positioning of the UE, the NW (base station) may estimate the information on the position/attitude of the UE based on a signal (e.g., a UL RS) transmitted from the UE.

Note that the positioning of the UE in the aperture pre-adaptation phase may be omitted.

Next, in the aperture pre-adaptation phase, aperture (e.g., an antenna element) pre-adaptation of the RIS may be performed.

In the present disclosure, the aperture adaptation may mean deciding/determining/selecting an antenna element/array to be used.

Next, in the aperture pre-adaptation phase, aperture (e.g., an antenna element) pre-adaptation of the BS may be performed.

Further, the system architecture including the RIS may include a beamforming phase.

The beamforming phase may follow the aperture pre-adaptation phase, for example.

In the beamforming phase, beamforming in the BS may be performed first.

Next, in the beamforming phase, beamforming in the RIS may be performed.

Then, in the beamforming phase, the UE may perform receiving. The UE may use a MIMO receiver based on CSI reception (CSIR).

Note that the receiving by the UE in the beamforming phase may be omitted.

### <Beamforming Methods for Far Field and Near Field>

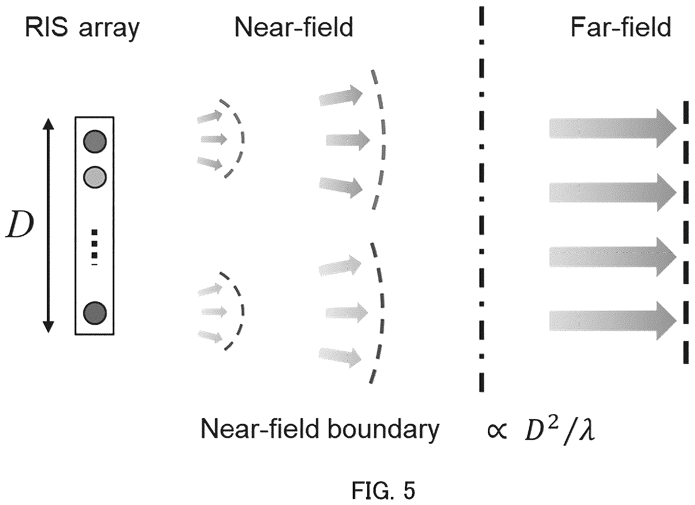

FIG. 5 is a diagram illustrating an example of a near field (NF) and a far field (FF) of the RIS. FIG. 5 illustrates an RIS array, a state of wave propagation in the near field of the RIS array, and a state of wave propagation in the far field of the RIS array. Note that the RIS array may be regarded as an example of a surface that transmits a signal or radiates a wave in the RIS. Further, the near field may be replaced with a short distance. Further, the far field may be replaced with a long distance.

A large aperture of the RIS indicates a specific characteristic of expanding a range of the near field. For example, as illustrated in FIG. 5, the boundary of the near field (e.g., the boundary between the near field and the far field) is proportional to the square of D that indicates the size related to the aperture of the RIS, and thus the large aperture of the RIS expands the range of the near field. Further, the boundary of the near field is inversely proportional to the wavelength λ, and thus the shorter the wavelength, that is, the higher the frequency, the larger the range of the near field. In the region of the near field, the phase delay for various elements of the RIS can be distinguished. As a result, the assumption of a plane wavefront is not useful, and it is necessary to consider a spherical wavefront. As illustrated in FIG. 5, in the region of the far field, a wavefront of a wave radiated from each element of the RIS is assumed to be a plane, but in the region of the near field, a wavefront of a wave generated from each element is a sphere.

A plurality of methods is being considered as a beamforming method for the existing far-field (FF) and near-field (NF).

For example, the beamforming methods may include a DFT-based beamforming (BF), a beamfocusing with an optimum phase, and a beamfocusing with a steering vector of a near field (NF).

The DFT-based BF may be mainly used for transmitting a signal to a distant terminal. The DFT-based BF may use a precoder (matrix) based on an angle-dependent linear phase.

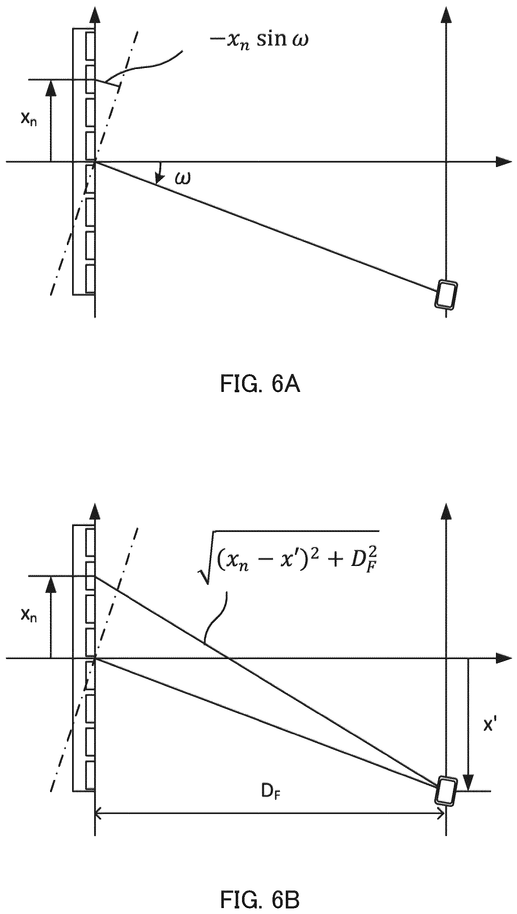

FIG. 6A is a diagram illustrating an example of the DFT-based beamforming (BF). Note that FIG. 6A illustrates an example of a uniform and linear array. In this example, xn is a distance from the array center to element n in the array and is an angle of a beam with respect to an axis perpendicular to the array.

The beamfocusing with the optimum phase may be mainly used for transmitting a signal to a close terminal. The beamfocusing with the optimum phase may use a precoder (matrix) based on a position (distance)-dependent non-linear phase.

FIG. 6B is a diagram illustrating an example of the beamfocusing with the optimum phase. Note that FIG. 6B illustrates an example of a uniform and linear array. In this example, DF is a focal distance, and x' is a distance from an axis perpendicular to the array to the focus.

The beamfocusing with the steering vector of the near field may be mainly used for transmitting a signal to a close terminal. The beamfocusing with the steering vector of the near field may use a precoder (matrix) based on an angle- & position (distance)-dependent quadratic phase.

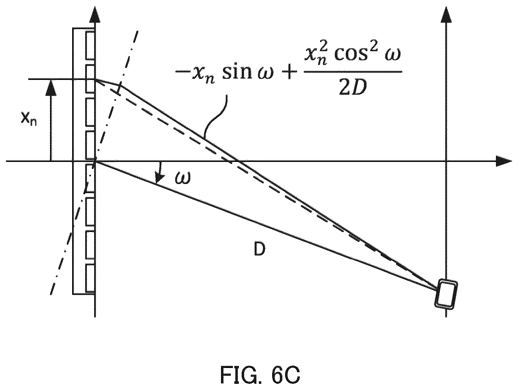

FIG. 6C is a diagram illustrating an example of the beamfocusing with the steering vector of the near field (NF). Note that FIG. 6C illustrates an example of a uniform and linear array. In this example, D is a distance from the center of the array to the focus, and ω is an angle from an axis perpendicular to the array to a straight line connecting the center of the array and the focus.

A conventional codebook for beamforming in the far field, such as a DFT codebook, cannot be directly applied to the near field because the conventional codebook is not suited to a channel in the near field. If the DFT codebook is applied to the beamforming in the near field, that may cause a significant loss of the SNR. In contrast, focused beamforming such as a ring-type codebook (RTC), which is a form in the near field of a coherent beamformer, does not have a restriction such as not being applicable to the near field.

For example, the RIS is adopted for data channel forwarding, and the above-described RTC generates a UE-specific focused beam to enable high-speed transmission.

Meanwhile, it is considered to use the RIS for forwarding a control channel (e.g., a synchronization signal block (SSB)).

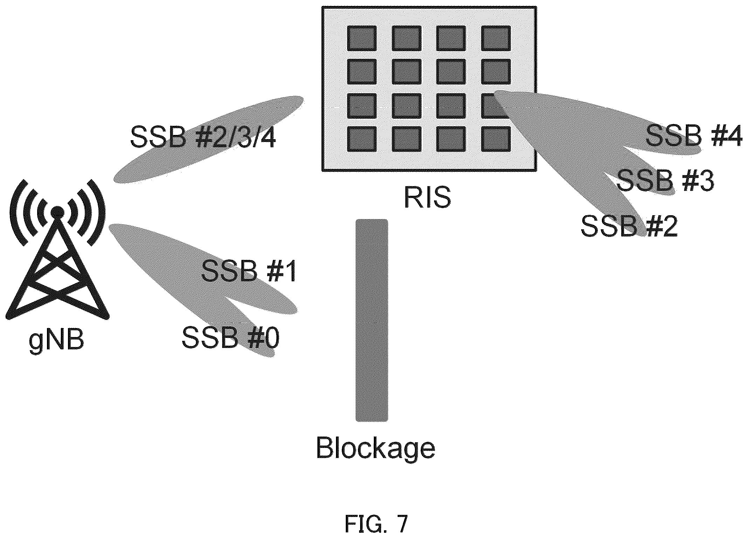

FIG. 7 is a diagram illustrating an example of SSB forwarding with the RIS applied. FIG. 7 illustrates the RIS forwarding the SSBs #2 to #4 among the SSBs #0 to #4 transmitted by the gNB.

In a case where the RIS forwards a control channel (e.g., the SSB), it is considered to expand a beam for the forwarding.

Here, an existing SSB forwarding method by the RIS and an existing beam expansion technology of the RIS will be described.

### <Existing Method>

Hereinafter, the existing SSB forwarding method by the RIS will be described. In the existing method, the RIS forwards an SSB transmitted by the gNB by using a large number of narrow beams. Therefore, in the existing method, a significant allocation of SSB resources is needed, or a significant change to the SSB scheme is needed.

Existing typical beam expansion technologies are classified into a technology based on a numerical optimization algorithm, a technology based on adjustment of an aperture, a technology based on logical subarray division, and an approach of wide-area illumination.

For example, in the technology based on a numerical optimization algorithm, the processing is complicated due to the complex algorithm. Therefore, it is difficult to achieve beamforming in a realistic time.

Further, for example, in the approach of wide-area illumination, it is difficult to accurately control the shaping of the pattern of a wide beam of the RIS according to a requirement of an actual coverage.

Further, for example, in the technology based on adjustment of an aperture, the beamforming gain of the array is reduced due to the adjustment of the aperture.

Further, for example, in the technology based on logical subarray division, the beamforming gain of the entire area varies significantly.

Here, an example of related art regarding the RIS including the adjustment of the aperture and the logical subarray division will be described.

### <First Example of Related Art>

The first example relates to a codebook/precoder design.

The codebook/precoder may be a codebook/precoder for the near filed (NF) or may be a codebook/precoder for the far field (FF).

In the present disclosure, the near field may mean a distance shorter than (or equal to) a specific threshold. In the present disclosure, the far field may mean a distance longer than (or equal to) a specific threshold.

The RIS (RIS-NCR) may receive information for the precoder/codebook from a NW. The information may be, for example, information regarding a position of another node (e.g., a UE/NW node). The information regarding the position may be, for example, at least one of information regarding the angle and information regarding the distance.

The first example is roughly divided into Examples 1-1 and 1-2. Example 1-1 or Example 1-2 may be applied, or Example 1-1 and Example 1-2 may be combined and applied.

### <Example 1-1>

Example 1-1 relates to a specific design of the codebook/precoder.

Example 1-1 is roughly divided into Examples 1-1-1 to 1-1-4. Any one of Examples 1-1-1 to 1-1-4 may be applied, or at least two of Examples 1-1-1 to 1-1-4 may be combined and applied.

The precoder may be calculated as an output of specific multiplication for a plurality of different precoders/matrices, for example.

In the present disclosure, the codebook, the precoder, the codeword, the matrix, the term, the vector, and the element may be replaced with each other.

### <Example 1-1-1>

The precoder in the RIS may be a precoder that decouples an angle-dependent term and a distance (position)-dependent term.

Example 1-1-1 may be used, for example, for beamforming/focusing of the NCR (RIS-NCR) including the RIS.

The precoder in the RIS may be calculated as, for example, a product of a distance-dependent precoder/matrix (e.g., WRing) and an angle-dependent precoder/matrix (e.g., WDFT) (e.g., a Hadamard product (element-wise product)).

For example, the precoder may be calculated by the following Equation 1.
[1]$\begin{matrix}W = {W}_{Ring} ∘ {W}_{DFT} \\ = \left[\begin{matrix}exp \left(j\frac{2 π \sqrt{{x}_{0}^{2} + {D}_{F}^{2}}}{λ}\right) exp \left(j\frac{2 πk}{ON}+j\frac{2 π \sqrt{{x}_{1}^{2} + {D}_{F}^{2}}}{λ}\right) … \\ exp \left(j\frac{2 π \left(N-1\right) k}{ON}+j\frac{2 π \sqrt{{x}_{N - 1}^{2} + {D}_{F}^{2}}}{λ}\right)\end{matrix}\right]\end{matrix}$ (Equation 1)

Here, D_{F} may be an axial distance between the array and the focal position.

Note that, in the present disclosure, the phase shift related to the distance-dependent precoder may be referred to as a ring-type phase distribution. Further, in the present disclosure, the codebook related to the distance-dependent precoder may be referred to as a ring-type codebook (RTC).

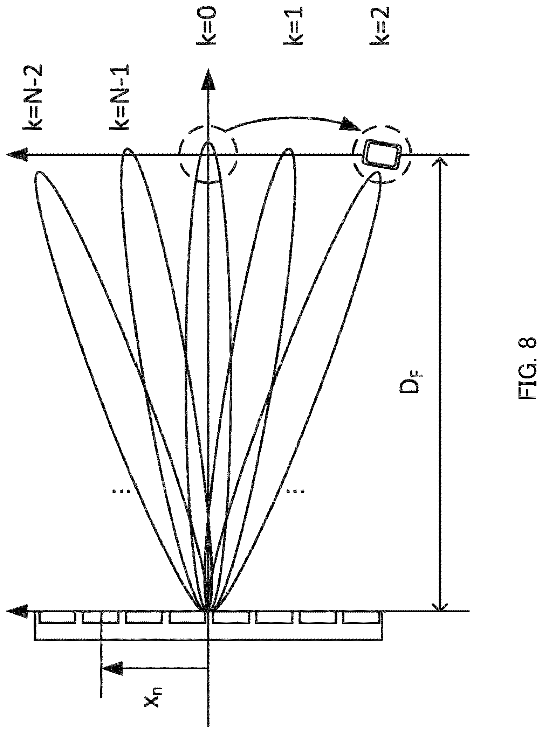

FIG. 8 is a diagram illustrating an example of the precoder according to Example 1-1-1. FIG. 8 illustrates an example of a uniform and linear array. In the example illustrated in FIG. 8, the beamfocusing at boresight is performed first. The distance-dependent precoder described above may be used for the beamfocusing. k is an index corresponding to a phase in the DFT.

In the example illustrated in FIG. 8, shifting of the focal position by the DFT vector is performed next. The angle-dependent precoder described above may be used for the shifting.

According to Example 1-1-1, using the angle-dependent term and the distance (position)-dependent term enables appropriate signal transmission to the target in the far field and the near field and allows for simple implementation.

### <Example 1-1-2>

The precoder in the RIS may be a precoder for which a piecewise linear approximation with DFT vectors is used.

For example, the precoder may be a precoder including a term for each of the subarrays (one or more arrays) and a distance (position)-dependent term.

Example 1-1-2 may be used for at least one of beamforming/focusing of the NCR (RIS-NCR) including the RIS and coherent transmission of a plurality of panels (e.g., panels disposed at wide intervals).

Further, Example 1-1-2 is suitable for the RIS-NCR based on the subarray.

The precoder in the RIS may be calculated as, for example, a product of a precoder for each of the subarrays (one or more arrays) and an angle-dependent precoder (e.g., a Hadamard product (element-wise product)).

The precoder for each of the subarrays (one or more arrays) may be represented by, for example, a product of a phase offset for each of the subarrays and an angle offset of the subarrays.

For example, the precoder may be calculated by the following Equation 2.
[2]${W}^{\left(i, j\right)} = {φ}_{PO}^{\left(i, j\right)} {W}_{AO}^{\left(i, j\right)} ∘ {W}_{DFT}$ (Equation 2)

Here, φ^{(i,j)}_{PO} may indicate a phase offset of the subarray (i,j). The phase offset of the subarray (i,j) may be quantized in a specific bit (e.g., b-bit) that can take a specific value (e.g., a value from 0 to 2π). Further, W^{(i,j)}_{AO} may indicate an angle offset of the subarray (i,j).

The W^{(i,j)}_{AO} may be calculated based on the inner product of the vector from the reference point of the array to the reference point of the subarray (i,j) and the vector from the reference point of the subarray (i,j) to the antenna element (m,n) in the subarray (i,j).

For example, W^{(i,j)}_{AO} may be calculated by the following Equation 3.
[3]${\left[{W}_{AO}^{\left(i, j\right)}\right]}_{\left(m.n\right)} = exp \left(j\frac{2 π}{λD}{\vec{r}}_{SA}^{\left(i, j\right)}⋅{\vec{r}}_{AE}^{\left(m, n\right)}\right)$ (Equation 3)

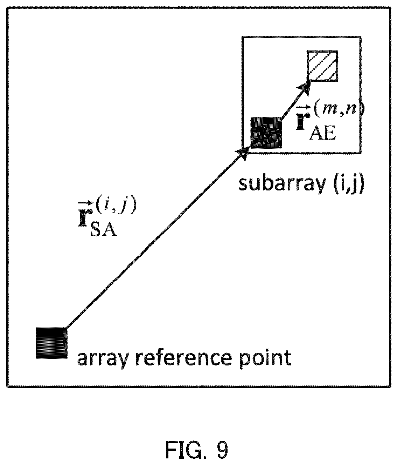

Here, D may be a distance from the array (e.g., a reference point of the array) to the target (e.g., the UE). Further, r^{(i,j)}_{SA} may indicate a vector from the reference point of the array to the reference point of the subarray (i,j), and r^{(m,n)}_{AE} may indicate a vector from the reference point of the subarray (i,j) to the antenna element (m,n) in the subarray (i,j) (see FIG. 9).

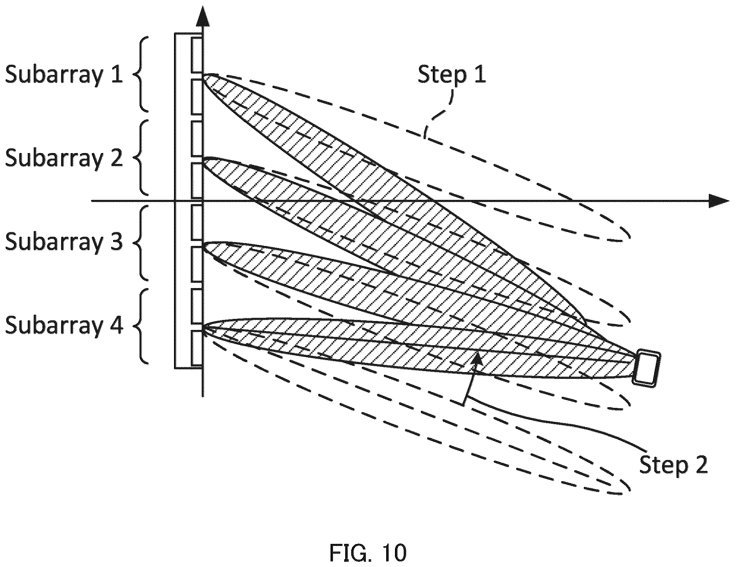

FIG. 10 is a diagram illustrating an example of the precoder according to Example 1-1-2. FIG. 10 illustrates an example of a uniform and linear array. In the example illustrated in FIG. 8, first, the focusing of the beam direction by the phase offset is performed for a plurality of arrays (each of subarrays) (Step 1). The above-described precoder based on the phase offset and the angle offset may be used for the beamfocusing.

In the example illustrated in FIG. 10, next, the shifting of the focal position by the DFT vector is performed (Step 2). The angle-dependent precoder described above may be used for the shifting.

According to Example 1-1-2, using the term for each of the subarrays (one or more arrays) and the distance (position)-dependent term enables appropriate signal transmission to the target in the far field and the near field.

### <Example 1-1-3>

The precoder in the RIS may be a precoder for which a term related to the near field and a term related to the far filed are used.

Example 1-1-3 may be used, for example, for acquiring the CSI in either the FF or the NF or both the FF and the NF (not limited to the FF and the NF), or may be used for the localization/sensing of the NF.

The precoder in the RIS may be calculated as, for example, a product of a first precoder and a second precoder (e.g., a Kronecker product (element-wise product)). The first/second precoder may include a term corresponding to the far field (or angle dependency) and a term corresponding to the near field (or distance dependency).

The precoder in the present example may be applied to a uniform planar array.

For example, the precoder W may be represented by the following Equation 4.
[4]$W = {W}_{{N}_{1} , {O}_{1} , {k}_{1} , D , {L}_{1}} ⊗ {W}_{{N}_{2} , {O}_{2} , {k}_{2} , D , {L}_{2}}$ (Equation 4)

Here, W is represented by a Kronecker product of first precoder W_{N_1, O_1, k_1, D, L_1} and second precoder W_{N_2, O_2, k_2, D, L_2}. Note that "N_1" represents "N₁". Other notations other than "N_1" may be represented in the same manner as "N_1".

W_{N_i, O_i, k_i, D, L_i} may be represented by, for example, the following Equation 5.
[5]$\begin{matrix}{\left[{W}_{{N}_{i} , {O}_{i} , {k}_{i} , D , {L}_{i}}\right]}_{n} = exp \left(2πj\frac{{nk}_{i}}{{O}_{i} {N}_{i}}+πj\frac{\left({n}^{2}-{nN}_{RP}\right) \left({L}_{i}^{2}-k{′}_{i}^{2}\right)}{{O}_{i}^{2} {N}_{i}^{2} D}\right) \\ n = 0 , 1 , … , {O}_{i} {N}_{i} - 1 \\ {k}_{i} = 0 , 1 , … , {O}_{i} {N}_{i} - 1 \\ k {′}_{i} = \left\{\begin{matrix}{k}_{i} & if {k}_{i} \leq {O}_{i} {N}_{i} / 2 \\ {O}_{i} {N}_{i} - {k}_{i} & otherwise\end{matrix}\right. \\ i = 1 , 2\end{matrix}$ (Equation 5)

Here, number Nᵢ of antenna elements (scattering elements) in the i-th axial direction and oversampling number Oᵢ in the i-th axial direction in the RIS array may be the same as the NR DFT-based codebook specified in the existing NR. i = 1 may correspond to an x-axis direction (horizontal direction). i = 2 may correspond to a z-axis direction (vertical direction). Further, kᵢ is a codeword index, and k' may represent a second-order term.

Further, N_{RP} may be a value depending on the reference point of the RIS array. For example, N_{RP} may be calculated by N_{RP} = 2(d_{RP} - d₀)/Δd.

For example, d_{RP} - d₀ may indicate a distance between a specific antenna element (e.g., antenna element #0) and a reference point, and Δd may indicate an antenna element spacing.

For example, in a case where the bottom left element of the array is used as the reference point, N_{RP} may be 0.

For example, in a case where the center coordinate of the array is used as the reference point, N_{RP} may be calculated by Nᵢ - 1.

D may indicate a normalized distance between the reference point and the focal distance. For example, D may be calculated by (focal length)/λ.

L may be a value related to a normalized equivalent aperture. L may be calculated by, for example, ON·Δd/λ.

### <Example 1-1-4>

The precoder in the RIS may be a precoder for which a precoder related to an access link (between the UE and the RIS) and a precoder related to a backhaul link (between the BS and the RIS) are used.

For example, the precoder may be a precoder including a term for each of the subarrays (one or more arrays) and a distance (position)-dependent term.

Example 1-1-4 may be used for at least one of beamforming/focusing of the NCR (RIS-NCR) including the RIS in the backhaul link/access link and the cascaded LoS-MIMO (e.g., the LoS-MIMO requiring a joint focal points indication).

The precoder in the RIS may be calculated as, for example, a product of a precoder related to the access link and a precoder related to the backhaul link (e.g., a Hadamard product (element-wise product)).

For example, the precoder may be calculated by the following Equation 6.
[6]$W = {W}_{AC} ∘ {W}_{BH}$ (Equation 6)

Here, W_{AC} may indicate a precoder of a beam in an access link of the RIS-NCR (an access beam, a beam toward the UE). Further, W_{BH} may indicate a precoder of a beam in a backhaul link of the RIS-NCR (a backhaul beam, a beam toward the BS).

At least one of W_{AC} and W_{BH} may be a precoder calculated by, for example, at least one of the methods described in Examples 1-1-1 to 1-1-3.

The focal distances of W_{AC} and W_{BH} may be selected/determined independently, or may be selected/determined at the same time (jointly). For example, the focal distances of W_{AC} and W_{BH} may be selected/determined in a conjugate symmetric manner.

According to Example 1-1-4, the precoder/codebook can be appropriately designed in the backhaul link as well as in the access link.

### <Parameters Related to Codebook/Precoder>

In the following, the parameters in each of the equations in Example 1-1 will be described.

L may be a parameter related to the aperture (e.g., the antenna element). L may be reported as the capability of the RIS-NCR (NCR-MT).

L may be reported by the RIS as the antenna number (the number of antennas)/interval in n dimensions (e.g., n is 2).

L may be reported by the RIS as the length of a side of the RIS (e.g., the antenna number × the antenna interval).

Nᵢ, Oᵢ, kᵢ, kᵢₚ, and Dᵢ (i = 1 or 2) may be parameters related to the codebook for the access link/backhaul link.

Nᵢ and Oᵢ may be related to the codebook of the RIS. The codebook of the RIS may be configured in advance for the RIS or may be defined in advance in the specification.

Nᵢ and Oᵢ may be determined based on a report on the capability of the RIS or may be determined regardless of the dimension of the RIS.

kᵢ may be related to the codebook of the RIS. The codebook of the RIS may be indicated to the RIS.

kᵢₚ may be calculated in the RIS based on a specific configuration/indication for the RIS.

Dᵢ (e.g., i = 1) may be a parameter related to a distance between the BS and the RIS. Dᵢ (e.g., i = 2) may be a parameter related to a distance between the UE and the RIS.

For example, D₁ may be set in advance by the BS to the RIS, and D₂ may be indicated by the BS to the RIS.

For example, D₁ and D₂ may be indicated by the BS (using a single compound CW).

For example, D₁ may be set in advance by the BS to the RIS, and D₂ may be measured by the RIS.

For example, D₁ and D₂ may be measured by the RIS.

For example, logarithmic quantization may be used for determination of D₁ and D₂.

N_{RP} may be a parameter related to the reference point of the RIS. N_{RP} may be, for example, a parameter related to an offset of the reference point of the RIS.

N_{RP} may be related to the codebook of the RIS. The codebook of the RIS may be indicated to the RIS.

The reference point of the RIS may mean a specific position.

For example, the reference point of the RIS may be a position of an antenna/subarray at a specific position (e.g., the bottom left).

For example, the reference point of the RIS may be a position of the center point of the RIS. In this case, a single large RIS or a plurality of separated subarrays is suitable.

For example, the reference point of the RIS may be reported by the RIS. The reference point of the RIS may be determined in accordance with the reference point reported by the RIS.

A parameter indicating an adaptation (aperture adaptation) mode may be defined. The parameter may be used for aperture control of the RIS.

The parameter indicating the adaptation mode may be related to the codebook of the RIS. The codebook of the RIS may be indicated to the RIS.

A parameter indicating the shape/size of the RIS may be defined. The parameter may be used for aperture control of the RIS.

The parameter indicating the shape/size of the RIS may be related to the codebook of the RIS. The codebook of the RIS may be indicated to the RIS.

The parameter may be indicated by a bitmap. Further, the parameter may be indicated by the directions and the lengths of two sides of the aperture that form a parallelogram. Further, the parameter may be indicated by the arrangement of the subarray (e.g., the direction, the interval, the subarray number, and/or the size of the subarray). Further, the parameter may be indicated by at least one of the directions/lengths of two sides of the aperture that form a parallelogram (may be referred to as a general mode), the subarray number (sampling rate), and the subarray size.

A parameter indicating a roll-off factor may be defined.

A parameter related to the conjugate symmetric RTC may be defined. The parameter may be a parameter related to the reference point related to the position of the UE.

The reference point related to the position of the UE may mean, for example, a specific antenna port of the UE (e.g., antenna port #0).

The reference point related to the position of the UE may mean, for example, a specific (e.g., the center) UE array configured by the BS.

### <Example 1-2>

In Example 1-2, the quantization for the angle (angle information) and the distance (distance information) in an indication of a codebook (to the NW/RIS-NCR) will be described.

Example 1-2 is roughly divided into Examples 1-2-1 and 1-2-2. Any one of Examples 1-2-1 and 1-2-2 below may be applied, or Examples 1-2-1 and 1-2-2 below may be combined and applied.

The NW (or the RIS-NCR) may transmit, to the RIS-NCR (or the NW), the angle information/distance information on a codebook/precoder quantized using at least one of Examples 1-2-1 and 1-2-2.

### <Example 1-2-1>

The quantization related to the angle and the quantization related to the distance may be performed separately (independently).

A specific quantization method may be used for the angle. The specific quantization method may be, for example, a DFT-based quantization method. Using the DFT-based approach for the quantization of the angle enables the quantization suitable for a unified design for the FF and the NF.

For example, linear quantization may be used for the distance. Using the linear quantization makes the implementation in the apparatus easy. For example, logarithmic quantization may be used for the distance. Using the logarithmic quantization enables appropriate quantization regardless of whether the distance between apparatuses is a long distance or a short distance.

The quantization for the distance may be performed using the following Equation 7.
[7]${D}_{n} ← {b}^{n} ⋅ {d}_{0} , n = 0 , 1 , 2 , …$ (Equation 7)

In the present disclosure, the range of the NF may be related to the array area. For example, the range of the NF may be (almost) proportional to the array area.

### <Example 1-2-2>

The quantization related to the angle and the quantization related to the distance may be performed jointly.

For example, the quantization related to the angle and the distance may be performed using a uniform grid in Cartesian coordinates (the angle and the distance may be quantized on the uniform grid). In this case, it can be suitably used for beamfocusing based on the localization/position.

For example, the quantization related to the angle and the distance may be performed using a non-uniform grid in spherical coordinates (the angle and the distance may be quantized on the non-uniform grid). In this case, it is suitable from the viewpoint of the aperture/NF range at boresight, and using a wider beam in a short distance achieves more uniform coverage and a reduction in the number of beams.

For example, the quantization related to the angle and the distance may be performed using the following Equation 8.
[8]${D}_{n} ← {b}^{n} ⋅ {d}_{0} {cos}^{2} ω , n = 0 , 1 , 2 , …$ (Equation 8)

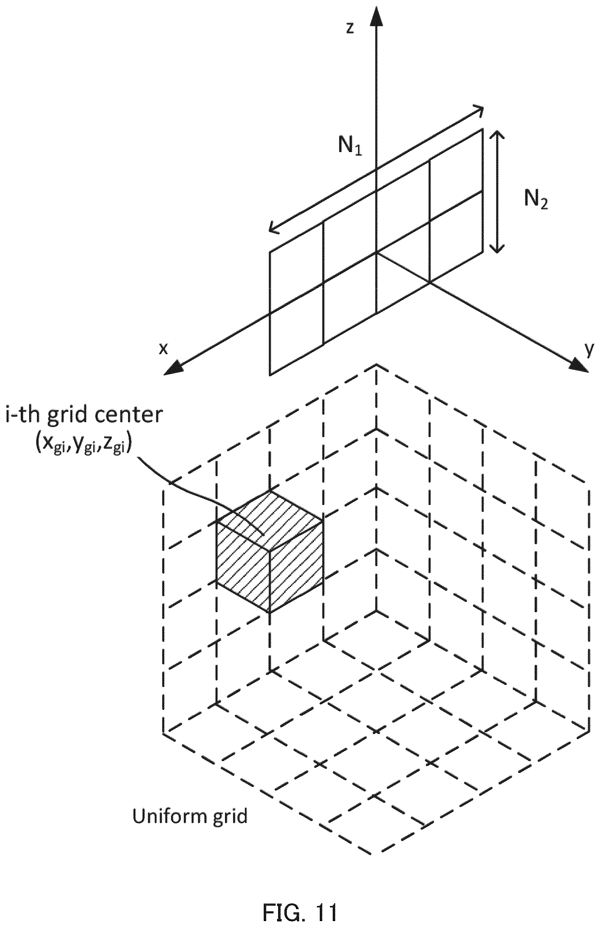

FIG. 11 is a diagram illustrating an example of a uniform grid in Cartesian coordinates. In the example illustrated in FIG. 11, a uniform grid in the Cartesian coordinates for the RIS (RIS-NCR) is illustrated.

In FIG. 11, (x_{gi}, y_{gi}, z_{gi}) may indicate the center coordinate of the i-th grid obtained from grid index i.

The uniform grid RTC using a uniform grid may be calculated by at least any one of the following Options 1 and 2.

The RTC using a uniform grid may be calculated by using the following Equation 9 (Option 1).
[9]$\begin{matrix}w = exp \left(-j2{πD}_{gi}\right) \\ {D}_{gi} \left({n}_{1}, {n}_{2}\right) = \sqrt{{\left({x}_{gi}-\left({n}_{1}-\frac{{N}_{1}}{2}\right)\frac{λ}{2}\right)}^{2} + {\left({y}_{gi}\right)}^{2} + {\left({z}_{gi}-\left({n}_{2}-\frac{{N}_{2}}{2}\right)\frac{λ}{2}\right)}^{2}}\end{matrix}$ (Equation 9)

The RTC using a uniform grid may be calculated by using the following Equation 10 (Option 2).
[10]$\begin{matrix}W = \left({W}_{{N}_{1} , θ}⊗{W}_{{N}_{2} , θ}\right) ∘ {W}_{D} \\ {\left[{W}_{{N}_{1} , θ}\right]}_{{n}_{1}} = exp \left(-{jπθn}_{1}\right) \\ {\left[{W}_{{N}_{2} , φ}\right]}_{{n}_{2}} = exp \left(-{jπφn}_{2}\right) \\ {\left[{W}_{D}\right]}_{\left({n}_{1}, {n}_{2}\right)} = {\left({x}_{gi}-\left({n}_{1}-\frac{{N}_{1}}{2}\right)\frac{λ}{2}\right)}^{2} + {\left({y}_{gi}\right)}^{2} + {\left({z}_{gi}-\left({n}_{2}-\frac{{N}_{2}}{2}\right)\frac{λ}{2}\right)}^{2} \\ {n}_{1} = 0 , 1 , … , {N}_{1} - 1 \\ {n}_{2} = 0 , 1 , … , {N}_{2} - 1\end{matrix}$ (Equation 10)

Here, the above θ may be calculated using the following Equation 11.
[11]$θ = sin μ cos ν , φ = sin ν$ (Equation 11)

Here, µ may represent an azimuth angle, and ν may represent an elevation angle. µ and the ν may be obtained by a specific coordinate conversion.

According to Example 1-2, the quantization for the angle (angle information) and the distance (distance information) in an indication of a codebook can be appropriately performed.

### <Second Example of Related Art>

The second example relates to the adaptation of the aperture in the RIS.

The second example is roughly divided into Examples 2-1 and 2-2. Any one of Examples 2-1 and 2-2 below may be applied, or Examples 2-1 and 2-2 below may be combined and applied.

The RIS-NCR may receive information (configuration information) on the control of the aperture (e.g., the antenna element) from the NW. The RIS-NCR may determine the aperture/antenna element to be used for a signal for a terminal based on the information.

### <Example 2-1>

The RIS (RIS-NCR) may select/decide/determine the aperture to be used from among the apertures included in the RIS.

Example 2-1 is roughly divided into Examples 2-1-1 and 2-1-2. Any one of Examples 2-1-1 and 2-1-2 below may be applied, or Examples 2-1-1 and 2-1-2 below may be combined and applied.

### <Example 2-1-1>

An unnecessary element (e.g., an antenna element) of the RIS may be configured to be off. Information related to the configuration may be included in information related to the control of the aperture received from the NW.

An unnecessary element of the RIS may be configured not to scatter (or reflect/refract) an incident signal. Further, an unnecessary element of the RIS may be configured to diffuse or randomly scatter (or reflect/refract) an incident signal.

### <Example 2-1-2>

Beamforming and the aperture adaptation may be used in combination.

Information on the beamforming may include, for example, information on a beamforming vector of the RIS.

For example, the (desired, actually used) aperture may be represented by a value (e.g., an aperture function) indicating the on/off state of each RIS element. Further, the (desired, actually used) aperture may be applied to a beamforming vector of the RIS.

For example, in a case where a value (e.g., an aperture function) corresponding to an RIS element is a first value (e.g., 0), the RIS element may be in an off state. Further, for example, in a case where a value (e.g., an aperture function) corresponding to an RIS element is a second value (e.g., 1), the RIS element may be in an on state.

The aperture adaptation may also be used to control a beam shape (e.g., at least one of a beam width, a side lobe, a main lobe, and a shape/size of a focus).

### <Example 2-2>

In Example 2-2, the control of the aperture in the RIS (RIS-NCR) will be described.

Example 2-2 is roughly divided into Examples 2-2-1 and 2-2-2. Any one of Examples 2-2-1 and 2-2-2 described below may be applied, or Examples 2-2-1 and 2-2-2 described below may be combined and applied.

### <Example 2-2-1>

A mode related to the aperture of the RIS-NCR may be defined.

The RIS-NCR may determine the aperture to be used based on the mode. The mode may include, for example, a first mode to a third mode.

The first mode may be a mode in which a part or all of the elements of the RIS are used in a square shape. The first mode may be referred to as, for example, a fallback mode.

The second mode may be, for example, a mode in which a part of the elements of the RIS is used in a parallelogram (rhombus) shape. The second mode may be referred to as, for example, a semi-continuous mode.

The third mode may be a mode in which only a specific RIS is used among the elements of the RIS. The specific RIS may be determined from a part of the elements of the RIS selected in a parallelogram (rhombus) shape. The third mode may be referred to as, for example, a discrete mode.

### <Example 2-2-2>

The shape/size of the aperture of the RIS-NCR to be used may be indicated by a specific method. Information related to the indication may be included in information related to the control of the aperture received from the NW.

For example, the shape/size of the aperture of the RIS-NCR to be used may be determined by a bitmap/parameter indicating the on/off state of the element of the RIS to be used.

The shape/size of the aperture in the second/third mode (e.g., the aperture in a parallelogram (rhombus) shape) may be indicated by a specific method. The specific method may be, for example, a method based on the lengths and the angle of two sides with respect to a specific point (e.g., a reference point) of the element of the RIS (the element of the RIS to be selected).

In the third mode, the size/number of the subarrays to be used may be additionally indicated.

According to the second example, the element/aperture of the RIS to be used can be appropriately determined/selected.

### <New Requirements in 6G>

It is expected that IMT-2030 functions as a basic infrastructure for realizing new user and application trends by integrating sensing and AI-related functions into communication.

Sensing supports various innovative applications. For example, imaging supports high-accuracy positioning and position determination of a device and/or an object, high-resolution and real-time 3D mapping for automated and safe driving and transportation, a digital twin, industrial automation, and the like. In addition, sensing supports recognition of human activity (gesture and the like), personal health sensing, sports analysis, environmental monitoring, material inspection, and the like.

### < Wireless Sensing>

The living environment is seamlessly surrounded by wireless signals. Among these, ubiquitous signals support wireless sensing. As a typical example, wireless sensing supports a smart factory, a smart home, environmental sensing, and the like. A representative application of wireless sensing is referred to as radio frequency sensing. For example, a signal beam is customized to scan a position of a human. The scanning of the position of the human corresponds to detection. Further, for example, a radio environment is adjusted to take a posture of a human or the like. The sensing of the posture corresponds to imaging. In the present disclosure, sensing and imaging may be interchanged with each other. Further, in sensing (imaging), since an object (e.g., a target) is scanned, scanning, sensing, and imaging may be interchanged with each other.

In radio frequency (RF) sensing, remote RF sensing (e.g., wireless sensing) is extended and is improved in accuracy by customizing the radio environment. Further, in RF sensing, high-accuracy position determination and recognition of a human and an object indoors are possible.

### <Imaging Method>

Imaging is roughly divided into active imaging and passive imaging.

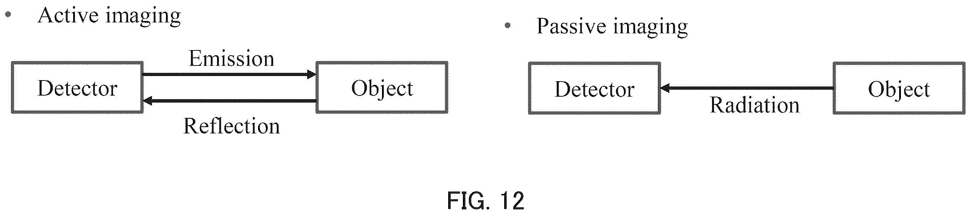

FIG. 12 is a diagram illustrating an example of active imaging and passive imaging. As illustrated in FIG. 12, in active imaging, a radar (detector in FIG. 12) emits electromagnetic waves to illuminate a detection area (corresponding to the Object in FIG. 12) and receives and records data of the electromagnetic waves reflected from the detection area. The radar performs data processing on the recorded data of the electromagnetic waves to acquire an image or a feature that characterizes the reflection characteristics of the detection area.

The active imaging technology has an advantage that a high SNR and a high resolution are obtained. Meanwhile, in the active imaging technology, the system is complicated and high in cost.

As illustrated in FIG. 12, in passive imaging, a certain device (detector in FIG. 12) captures radiation energy radiated from an object (Object in FIG. 12) in a detection area and records the radiation energy. In the passive imaging, the device performs information processing on the recorded information to acquire an image or a feature that characterizes the radiation characteristics of the detection area.

The passive imaging technology has an advantage of real-time imaging and high concealment. Meanwhile, in the passive imaging technology, the resolution is low and it is likely that the surrounding environment has impact.

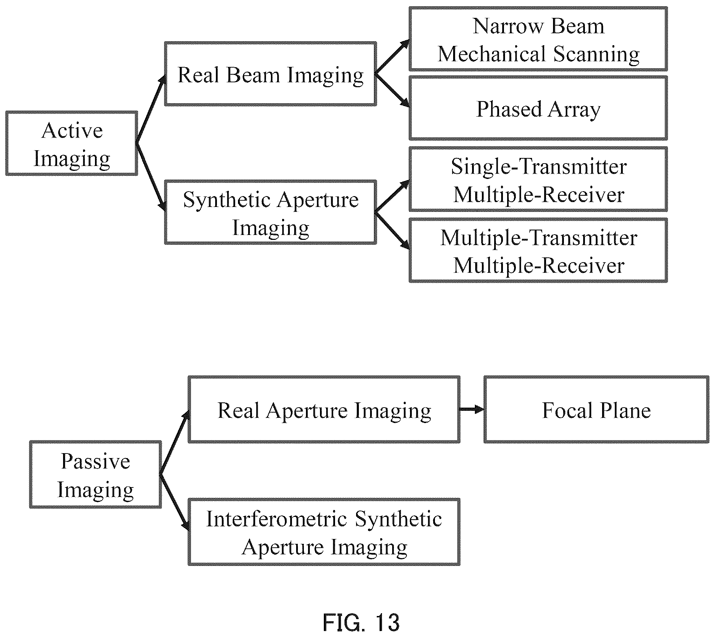

FIG. 13 is a diagram illustrating types of active imaging and passive imaging. As illustrated in FIG. 13, active imaging includes real beam imaging and synthetic aperture imaging. The real beam imaging includes narrow beam mechanical scanning and a phased array. Further, the synthetic aperture imaging includes an imaging method using a single transmitter and a plurality of receivers, and an imaging method using a plurality of transmitters and a plurality of receivers.

Further, as illustrated in FIG. 13, the passive imaging includes real aperture imaging (e.g., imaging of a focal plane) and interferometric synthetic aperture imaging.

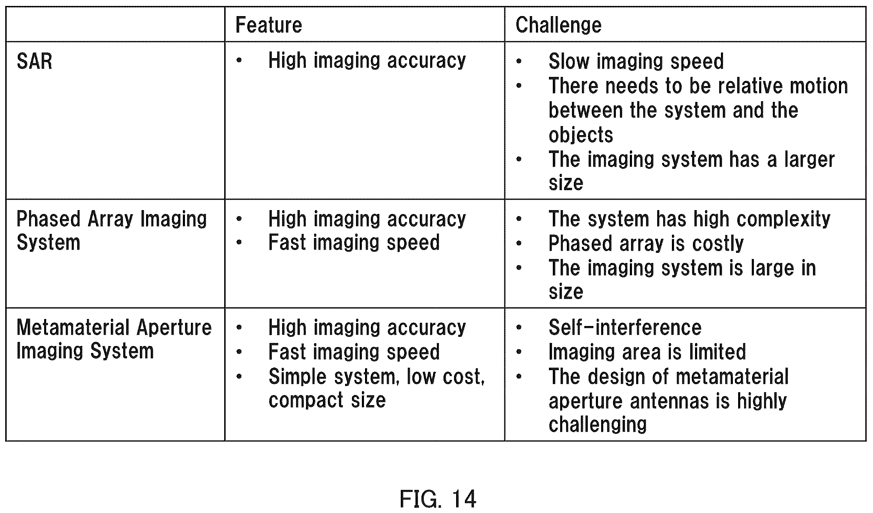

FIG. 14 is a diagram illustrating a comparison of active imaging. FIG. 14 illustrates three types of imaging features and problems of a synthetic aperture radar (SAR), a phased array imaging system, and a metamaterial aperture imaging system.

The SAR has high imaging accuracy. Meanwhile, the SAR has problems such as a slow imaging speed, a need for relative movement between the imaging system and the target object, and a large-scale system.

The phased array imaging system has high imaging accuracy and a fast imaging speed. Meanwhile, the phased array system is complicated as a whole, and the cost of the phased array is high. Further, the size of the imaging system is large.

The metamaterial aperture imaging system has features such as high imaging accuracy, a fast imaging speed, a simple system, a low cost, and a compact size. Meanwhile, the metamaterial aperture imaging system has problems such as the presence of self-interference, the limitation of the imaging area, and the difficulty in designing a metamaterial aperture antenna.

### <RIS-aided Wireless Sensing>

For the above-described imaging (or sensing), a new technology that can realize a low manufacturing cost, simple and flexible introduction, compatibility with 6G requirements for sensing and position determination, and the like is expected.

The above-described RIS is also attracting attention as one of such new technologies. The RIS uses a metamaterial, has high cost-effectiveness in manufacturing and deployment, and can control and customize a radio environment. Further, the RIS can provide high-accuracy contact and non-contact sensing by radio data collection.

Therefore, an RIS aided wireless sensing system in which the RIS is introduced to support a sensing (imaging) system has been discussed.

The RIS can control the radio environment and create a good RF sensing environment. Therefore, the RIS aided wireless sensing system has been discussed, and in particular, applying the RIS aided wireless sensing system to human posture recognition makes it possible to image various postures of a human.

Here, as an existing imaging method, a phased array imaging system and

### <Phased Array Imaging System>

The phased array system executes high-speed and efficient electronic scanning as compared with a mechanical scanning method. The speed of the scanning is very important for applications such as a radar in which rapid detection and tracking of a target are essential.

The advantages of the phased array imaging include the ability to create a high-resolution image, the ability to quickly adapt to a changing situation, and the reduction of the need for mechanical scanning. Meanwhile, in the phased array imaging, in a case where a phased array antenna having a large aperture is used, the cost and the power consumption are high.

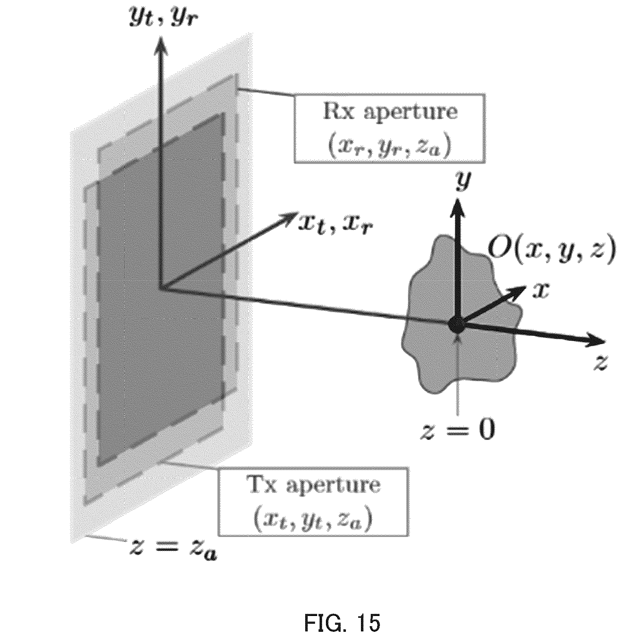

FIG. 15 is a diagram illustrating a configuration example of a phased array system. FIG. 15 illustrates a transmission aperture, a reception aperture, and a target object present at z = 0 in a three-dimensional orthogonal space of x, y, and z.

In a condition of a far field, the distribution of the transmission array is represented by at(x,y), and the distribution of the reception array is represented by ar(x,y). AFTₓ and AF_{Rx} are array coefficients of the transmission array and the reception array, respectively. The overall array coefficient AF is represented by a product of the array coefficient of the transmission array and the array coefficient of the reception array. Further, a convolution of at(x,y) and ar(x,y) is called an effective aperture or an equivalent array.

For example, AF_{Tx}, AF_{Rx}, and AF are represented by the following Equation 12.
[12]$\begin{matrix}{AF}_{Tx} = {\int }_{∀ x} {\int }_{∀ y} {a}_{t} \left(x, y\right) {e}^{- jkx \left({u}_{0}-u\right)} {e}^{- jkx \left({v}_{0}-v\right)} dxdy \\ {AF}_{Rx} = {\int }_{∀ x} {\int }_{∀ y} {a}_{r} \left(x, y\right) {e}^{- jkx \left({u}_{0}-u\right)} {e}^{- jkx \left({v}_{0}-v\right)} dxdy \\ {AF}_{Tx} \left(k\left({u}_{0}-u\right),k\left({v}_{0}-v\right)\right) = {F}_{2 D} \left\{{a}_{t}\left(x, y\right)\right\} \\ {AF}_{Rx} \left(k\left({u}_{0}-u\right),k\left({v}_{0}-v\right)\right) = {F}_{2 D} \left\{{a}_{r}\left(x, y\right)\right\} \\ AF = {AF}_{Tx} ⋅ {AF}_{Rx} = {F}_{2 D} \left\{{a}_{t}\right\} ⋅ {F}_{2 D} \left\{{a}_{r}\right\} = {F}_{2 D} \left\{{a}_{t}∗{a}_{r}\right\}\end{matrix}$ (Equation 12)

Further, resolutions δx, δy, and δz in the x-axis direction, the y-axis direction, and the z-axis direction are represented by the following Equation 13.
[13]$\begin{matrix}{δ}_{x} = \frac{{λ}_{c} R}{{L}_{x}^{t} + {L}_{x}^{r}} \\ {δ}_{y} = \frac{{λ}_{c} R}{{L}_{y}^{t} + {L}_{y}^{r}} \\ {δ}_{z} = \frac{c}{2 B}\end{matrix}$ (Equation 13)

Here, R represents a distance from the target to the center of the array. L^{t}ₓ and L^{t}_{y} represent dimensions of the transmission array in the x direction and the y direction. L^{r}ₓ and L^{r}_{y} represent dimensions of the reception array in the x direction and the y direction.

### <SAR>

In the SAR, data collection is executed by moving the radar along a trajectory in an X-Y plane to reconstruct a two-dimensional image of a certain scene, and a rectangular grid of measurement points is created.

The advantages of the SAR include the ability to realize high-resolution imaging using an antenna having a small aperture. Meanwhile, in the SAR, in order to realize a synthetic aperture with a large aperture, mechanical scanning with an antenna is required.

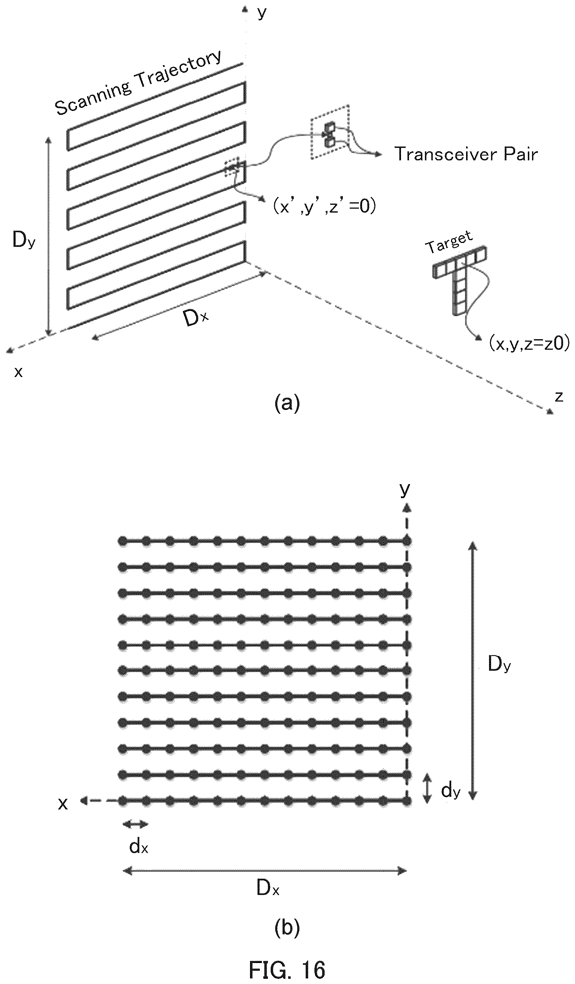

FIG. 16 is a diagram illustrating a configuration example of the SAR. FIG. 16 illustrates a configuration of the entire system as (a) and a configuration of the aperture as (b).

As illustrated in FIG. 16, the aperture of the SAR performs scanning on the target along a specific trajectory.

Here, a two-dimensional imaging algorithm used in the SAR or the like will be described.

After associating the target, which is a scanning target, with the coordinates of the aperture, a two-dimensional reflectivity image is represented by the following Equation 14.
[14]$f \left(x, y\right) = {FT}_{2 D}^{- 1} \left[{FT}_{2 D}\left[s\left(x, y\right)\right]{FT}_{2 D}\left[h\left(x, y\right)\right]\right]$ (Equation 14)

Here, FT_{2D} and FT⁻¹_{2D} represent two-dimensional Fourier transformation and inverse Fourier transformation in the x-y plane, respectively. Further, f(x,y) represents a function of a two-dimensional target reflectivity, and s(x,y) represents a measured signal of the radar. Further, h(x,y) represents an impulse response or a point spread function of the imaging system calculated for each measurement point (x,y) according to the following Equation 15.
[15]$h \left(x, y\right) = {e}^{- j 2 k \sqrt{{x}^{2} + {y}^{2} + {z}_{0}^{2}}}$ (Equation 15)

### <Consideration Items>

As described above, the RIS aided wireless sensing system may provide various advantages such as cost-effectiveness and sensing accuracy. Meanwhile, in the RIS aided wireless sensing system, there is room for consideration of a method in which the RIS efficiently aids sensing.

For example, there is room for consideration of how to control a beam for scanning output from the RIS to realize high sensing accuracy and fast sensing speed.

For example, in order to obtain high sensing accuracy, it is desirable to perform scanning with a fine granularity, but in a case where scanning is performed with a granularity that is excessively fine, a delay in sensing occurs, and the efficiency is reduced. Therefore, it is desirable to perform appropriate scanning according to a scanning target (a target of sensing (imaging)), accuracy required for scanning, time required for scanning, and the like.

Further, for example, in a system including the RIS, there is room for consideration of how to realize sensing and communication. For example, it is considered that the system including the RIS achieves both sensing and communication to efficiently perform both sensing and communication. Further, since the system including the RIS achieves both sensing and communication without installing both a system for sensing and a system for communication, the installation cost can be reduced.

Therefore, in Proposal 1 of the present embodiment below, a method of adjusting a granularity of scanning in the RIS will be described. Further, in Proposal 2, a method of efficiently achieving both sensing and communication in the system including the RIS will be described.

### <Proposal 1>

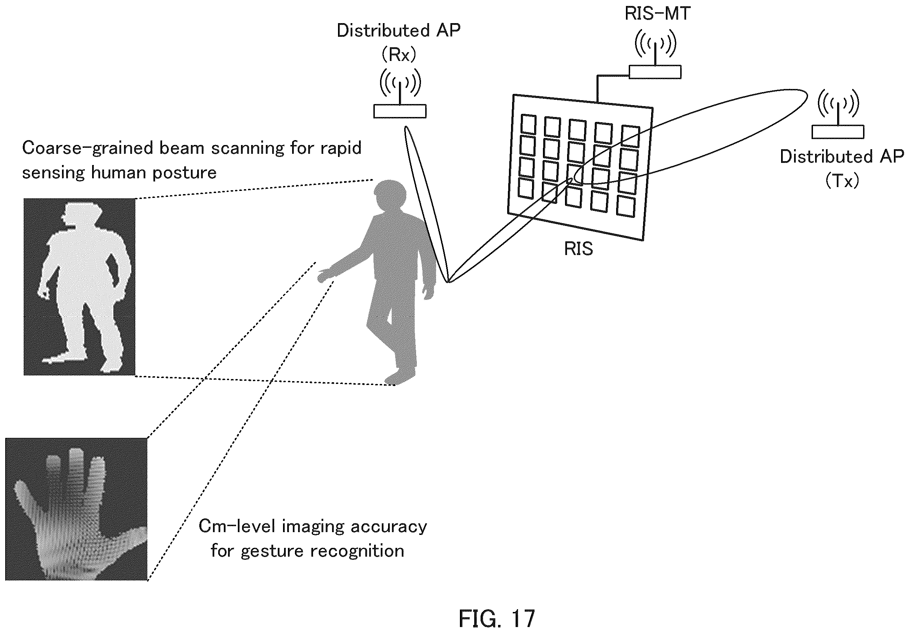

FIG. 17 is a diagram illustrating an overview of the RIS aided wireless sensing system. As illustrated in FIG. 17, in the RIS aided wireless sensing system, the RIS aids wireless sensing by controlling a reflected beam between a pair of Tx-Rx APs.

An access point (AP) is an example of a radio communication apparatus, but in the system according to the present disclosure, the radio communication apparatus is not limited to an AP. For example, a BS (e.g., a gNB), a UE, a distributed AP, or the like may be used instead of the AP.

In Proposal 1, the following two-step RIS beam scanning is executed. In at least one of the following two steps of the RIS beam scanning, a near-field ring type codebook (RTC) may be used.
· Step 1: Coarse beam scanning
· Step 2: Fine beam scanning

A method of switching the granularity in the beam scanning using the RTC (e.g., RTC-based beam scanning granularity switching) will be described below. Further, in the above two steps, the terms "coarse" and "fine" are intended to indicate a difference in relative granularity. That is, it is intended that the granularity of step 1 is coarser than the granularity of step 2 in the two steps.

In step 1 described above, for example, detection of a posture of a person is realized. Further, in step 2, recognition of a gesture is realized. In step 2, for example, a gesture around a hand is recognized. In Proposal 1, the RIS aided wireless sensing system may perform the two steps in order or may be configured to perform any one of steps.

For example, the RIS configures any one of a beam used in the coarse beam scanning or a beam used in the fine beam scanning, and forms a beam and transmits a signal based on the configuration. The coarse beam scanning corresponds to, for example, scanning with a first granularity, and the fine beam scanning corresponds to scanning with a second granularity that is finer than the first granularity.

With such two-step scanning, the posture of the person can be sensed at a relatively high speed, and the gesture can be recognized with accuracy at a centimeter level. As a result, wireless sensing accuracy at a centimeter level can be achieved with a relatively low delay, and efficient sensing can be performed.

In the above, an example in which there are two steps has been described, but the present disclosure is not limited to this. For example, three or more types of beam scanning in which the fineness of the granularity is different from each other may be used. Further, the RIS may select any two or more of the three types of beam scanning that can be used. The types of beam scanning that can be used by the RIS may be reported as a capability of the RIS.

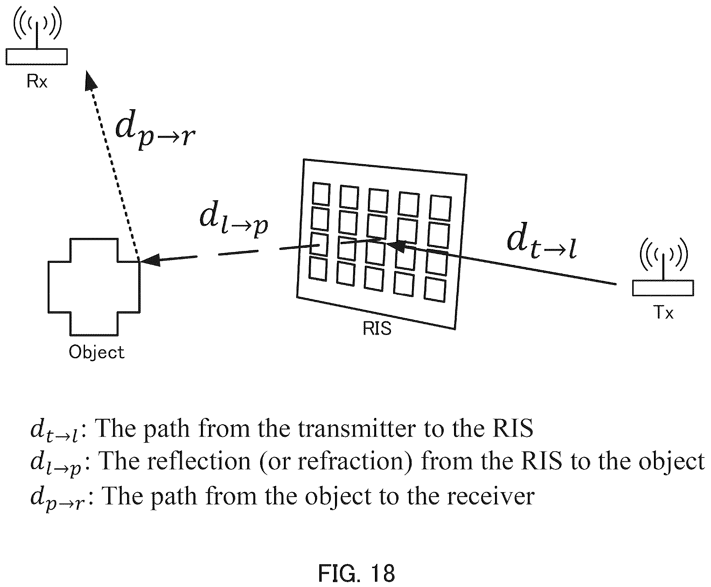

FIG. 18 is a diagram illustrating an example of a system model of the RIS aided wireless imaging system. FIG. 18 illustrates a pair of transmitters (Tx) and receivers (Rx), the RIS, and an imaging target (object). The RIS has a configuration of M×N elements of a uniform rectangular array.

FIG. 18 illustrates a distance of a path from the transmitter to the RIS, a distance of a reflected (or refracted) path from the RIS to the target, and a distance of a path from the target to the receiver.

Here, a signal received by the receiver is represented by the following Equation 16.
[16]${y}_{r} = {φ}^{H} {G}^{s} vx$ (Equation 16) $φ = {\left\{{e}^{{jθ}_{1}}, ⋯, {e}^{{jθ}_{n}}\right\}}^{H}$ [17]

Note that Equation 17 indicates phase shifters of all elements of the RIS.

G^{S} represents an influence of a time delay and a path loss caused by signal propagation. For example, the time delay causes a phase shift amount of a transmission signal related to a frequency of an s-th subcarrier. Further, the path loss is given by multiplying an amplitude of the signal by an attenuation coefficient.

Therefore, each element of G^{S} is represented by the following Equation 17.
[18]$G \left(l, p\right) = α \left(lp\right) {e}^{{ϕ}_{lp}^{s}} = α \left(lp\right) {e}^{{e}^{j \frac{2 π}{{λ}_{s}} \left({d}_{t \to l}+{d}_{l \to p}+{d}_{p \to r}\right)}}$ (Equation 17)

*α*(*lp*) is an attenuation coefficient based on both attenuation and fading. ${ϕ}_{lp}^{s}$ indicates a phase shift amount of a transmission signal related to a frequency of an s-th subcarrier.

*v =* {*v*₁, ··· , *vₚ,* ··· *, vₚ*} indicates a vector including reflection coefficients of all points.

The compensation for each point is executed to correct a phase difference of an echo signal caused by a spatial distance between a scattering point and a sampling point. Thereafter, coherent addition is applied to the echo signal at each sampling point. Here, a back-projection algorithm will be described as an example of the imaging algorithm.

### <Back-Projection Algorithm (BP)>

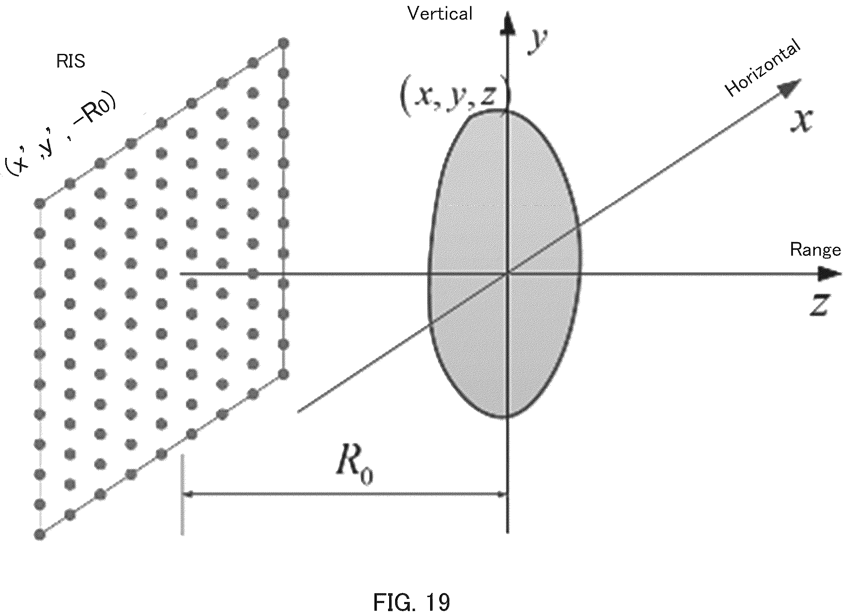

FIG. 19 is a diagram illustrating an example of the back-projection algorithm. The process of the back-projection algorithm starts from re-dividing the imaging region into a plurality of imaging units. For each imaging unit, a spatial distance to all sampling points is calculated, and a phase change related to different frequencies is determined.

The phase change is used as a conversion rule to apply phase compensation to echo data. The echo data is data obtained from a signal reflected from an imaging target object. The signal reflected from the imaging target object may be referred to as an echo signal hereinafter.

Next, a three-dimensional complex vector matrix is coherently added to acquire a magnitude representing an intensity of a reflectivity coefficient of the imaging unit.

A three-dimensional imaging result reflecting an intensity of a reflection coefficient of the target is acquired across all imaging units in the three-dimensional imaging region. The imaging process of the BP algorithm is represented by the following Equation 18.
[19]$\begin{matrix}σ \left(x, y, z\right) \\ = {∭}_{{D}_{x} , {D}_{y} , {D}_{z}} s \left(x′,y′,f\right) exp \left[j2πf\frac{2 \sqrt{{\left(x-x′\right)}^{2} + {\left(y-y′\right)}^{2} + {\left(z+{R}_{0}\right)}^{2}}}{c}\right] dx ′ dy ′ df\end{matrix}$ (Equation 18)

The RIS aids both a system in which reception and transmission are separated and a system in which reception and transmission are integrated. Both the system in which reception and transmission are separated and the system in which reception and transmission are integrated can effectively realize wireless imaging.

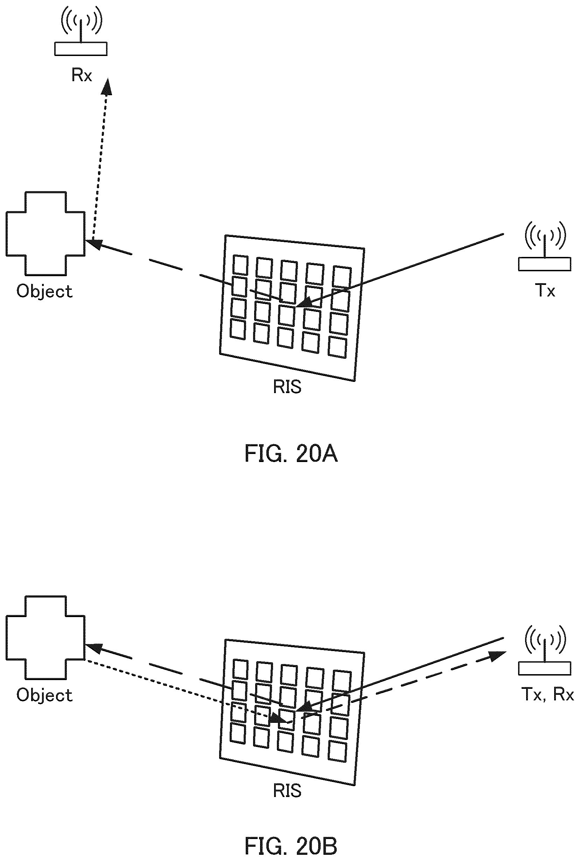

FIG. 20A is a diagram illustrating an exemplary system in which reception and transmission are separated. FIG. 20A illustrates a system in which a transmitter (Tx) and a receiver (Rx) are separately provided. In the system illustrated in FIG. 20A, a signal transmitted from the transmitter and reflected by the RIS is reflected by the target. The reflected signal reflected by the target is received by a receiver different from the transmitter.

FIG. 20B is a diagram illustrating an exemplary system in which reception and transmission are integrated. FIG. 20B illustrates a system including a communication apparatus in which the transmitter (Tx) and the receiver (Rx) are integrated. In the system illustrated in FIG. 20B, a signal transmitted from the communication apparatus and reflected by the RIS is reflected by the target. The reflected signal reflected by the target is reflected by the RIS and received by the communication apparatus.

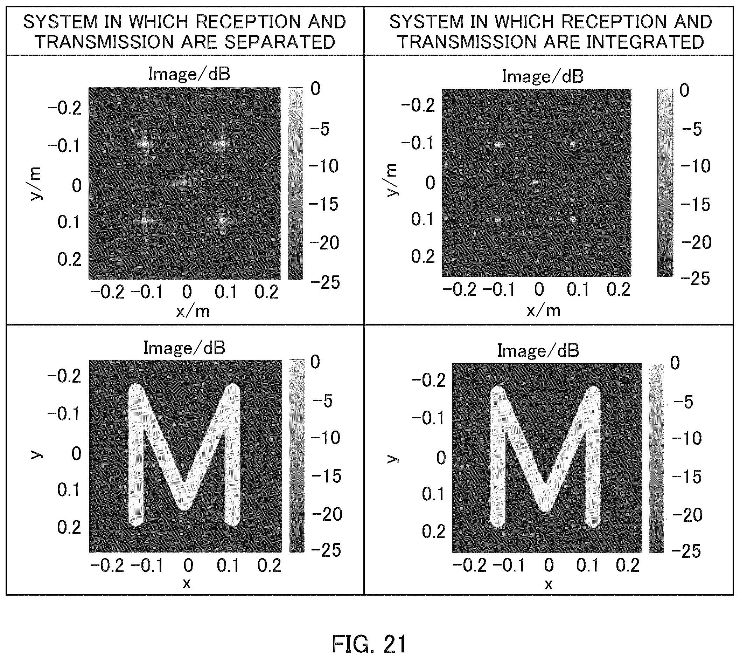

FIG. 21 is a comparative diagram of characteristics of the system in which reception and transmission are separated and the system in which reception and transmission are integrated. FIG. 21 illustrates an imaging result of the target in each of the exemplary systems in which reception and transmission are separated and the system in which reception and transmission are integrated. According to the example of FIG. 21, the system in which reception and transmission are integrated achieves higher imaging accuracy.

### <RTC-Based Beam Scanning Granularity Switching>

Next, a method using the RTC will be described as an example of the method of beam scanning with different granularities described above. The RIS uses the RTC in both a communication mode and a sensing (imaging) mode.

Through the sensing process, the granularity of the beam scanning of the RTC is dynamically adjusted at various stages.

In a task such as rough positioning and/or posture detection of the target, the RTC uses coarse granularity grid division. Using the coarse granularity grid division makes it possible to effectively shorten the scanning time.

In a task such as gesture recognition, the RTC uses fine grid division. Using the fine grid division makes it possible to improve the scanning accuracy.

### <Coarse-Fine Granularity Grid Division of RTC>

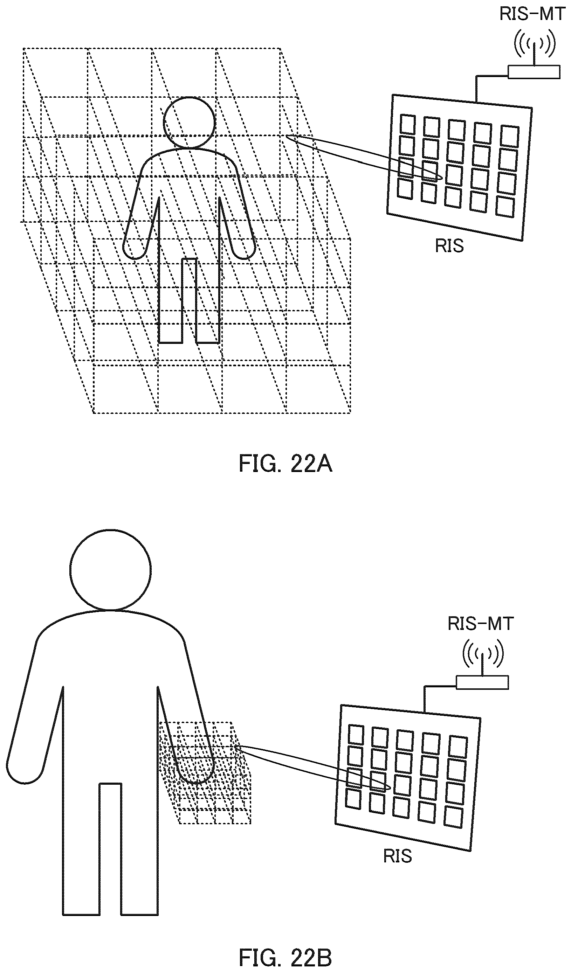

FIGS. 22A and 22B are diagrams illustrating an example of the grid division. In the sensing (imaging) mode, the RIS adopts the uniform grid RTC for the beam scanning. FIG. 22A illustrates an example of relatively coarse grid division, and FIG. 22B illustrates an example of relatively fine grid division.

In the RTC-based beam scanning, different granularities are used at various stages of the sensing (imaging).

The granularity of the grid division, together with the size of the target area, determines the number of codewords in a subset of a beamforming codebook for the uniform grid RTC beam scanning.

The larger the size of the target area, the larger the number of codewords. Further, the smaller the granularity (e.g., the size) of the grid division is, the larger the number of codewords is.

In a case where the size of the target area is M×M×M cubic meters and the granularity of the grid division is N×N×N cubic meters, the subset of the beamforming codebook of the uniform grid RTC includes a total of (M/N)³.

The granularity of the grid division described above directly affects the resolution of the image.

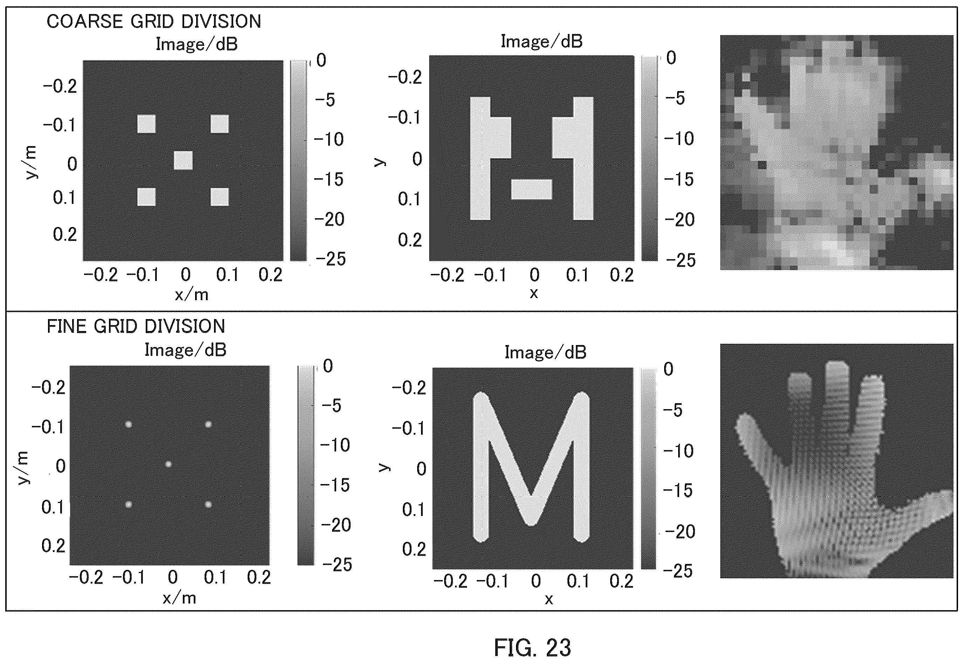

FIG. 23 is a diagram illustrating an example of an imaging result in the grid division. FIG. 23 is a diagram illustrating an example of an imaging result in the grid division with the fine granularity. An imaging result of three types of targets is illustrated. The three types of targets are common to each other. As illustrated in FIG. 23, in the coarse grid division, coarse imaging is performed, and in the fine grid division, high-accuracy imaging can be realized.

The selection of the granularity of the grid division may be dynamically adjusted based on the resolution requirement of the actual system.

In the above, an example in which the size of the grid in the grid division is uniform has been described, but the present disclosure is not limited to this. The size of the grid may be non-uniform. For example, in the target object of the sensing, an area in which detailed sensing is desired may be divided into a finer grid than other areas.

### <Proposal 2: Mode Switching>

In Proposal 2, the RIS has a configuration of switching between a plurality of modes. For example, the RIS has two modes of a communication mode and a sensing mode, and may switch between the two modes. The switching may be performed dynamically, for example, in response to an indication. The sensing mode may be referred to as an imaging mode.

The network side indicates the system including the RIS to execute the mode switching periodically or on a trigger basis.

The RIS performs configuration of switching between the sensing mode and the communication mode, and transmits the signal based on the set mode. The sensing mode is a mode in which a region to be sensed is sensed, and the communication mode is a mode in which a signal is transmitted from a transmission apparatus (e.g., AP) to a reception apparatus (e.g., a UE).

In a case where the mode is switched periodically, the network side indicates the system including the RIS to execute the mode switching periodically. The network side may be, for example, an AP or a control apparatus considered as a higher layer apparatus than the AP. The indication information for the indication from the network side to the system may include information on the selection of Tx, RIS, and Rx, a relative spatial relationship, a sensing area, a granularity of the beam scanning, and the like.

In a case where the mode is switched on a trigger basis, the receiver (e.g., UE) transmits a mode switching request to the network, and the network side indicates the system to execute the mode switching. In this case, the sensing result may be transmitted from the network side to the UE, or the UE may receive an echo signal as the receiver and independently process the sensing. The indication information for the indication from the network side to the system may include information on the selection of Tx, RIS, and Rx, a relative spatial relationship, a sensing area, a granularity of the beam scanning, and the like.

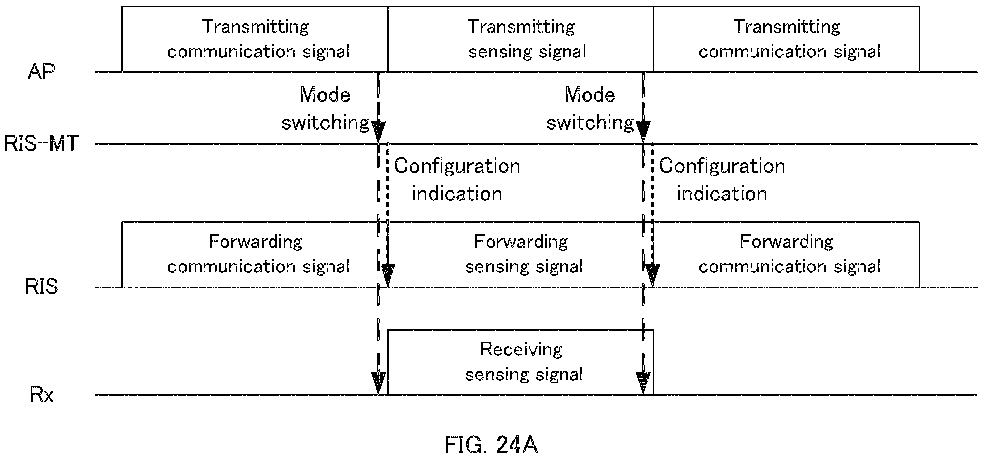

FIG. 24A is a diagram illustrating an example of the mode switching based on the periodic indication to the system including the RIS. FIG. 24A illustrates an example in which the mode is switched from the communication mode to the sensing mode and is switched from the sensing mode to the communication mode again. FIG. 24A illustrates a flow of signals or information of the AP, the RIS, the RIS-MT, and the receiver (Rx).

In the example of FIG. 24A, in the communication mode, the AP transmits a communication signal (communication signal in FIG. 24A), and the RIS performs processing of forwarding the communication signal. The AP may receive the communication signal, or in one communication mode section, the AP may perform both transmission and reception of the communication signal.

In the example of FIG. 24A, at the end of the communication mode, the AP indicates the RIS-MT and the receiver to switch the mode from the communication mode to the sensing mode. In other words, in a case where the indication of the mode switching is performed, the mode is switched from the communication mode to the sensing mode. For example, the indication is performed by transmitting a control signal including control information for indicating the mode switching from the AP to the RIS-MT and the receiver. The control information may include information on the configuration of the RIS and/or the receiver. The information on the configuration of the RIS and/or the receiver includes at least one of information on the selection of the transmitter (e.g., AP), the RIS, and the receiver, a relative spatial relationship, a sensing area, a granularity of the beam scanning, and control information (e.g., RTC) used by the RIS. For example, the RIS-MT indicates the configuration (Configuration) of the RIS based on the indication. For example, the RIS-MT indicates a change in a transmission destination of the RIS, a change in a direction in which the RIS transmits the signal, a change in the control information (e.g., RTC) used by the RIS, and the like. The RIS that receives the indication performs the configuration based on the indication. Further, the receiver may perform the configuration based on the control information.

In the example of FIG. 24A, the AP indicates the RIS-MT to switch the mode, the RIS is configured, and the mode is switched from the communication mode to the sensing mode. After the switching to the sensing mode, the AP transmits a signal for sensing (sensing signal in FIG. 24A), and the RIS performs processing of transmitting the signal for sensing. The echo signal (echo signal in FIG. 24A) in which the signal for sensing is reflected by the target is received by the receiver. The AP may be configured to receive the echo signal.

In the example of FIG. 24A, at the end of the sensing mode, the AP indicates the RIS-MT and the receiver to switch the mode from the sensing mode to the communication mode. For example, the indication is performed by transmitting a control signal including control information for indicating the mode switching from the AP to the RIS-MT and the receiver. The RIS-MT indicates the configuration (Configuration) of the RIS based on the indication. For example, the RIS-MT indicates a change in a direction in which the RIS forwards the signal, a change in the control information (e.g., the RTC) used by the RIS, and the like. The RIS that receives the indication performs the configuration based on the indication. The receiver may perform the configuration based on the control information.

As described above, in FIG. 24A, the AP indicates the RIS-MT and the receiver to switch the mode, the RIS is configured, and the mode is switched from the sensing mode to the communication mode.

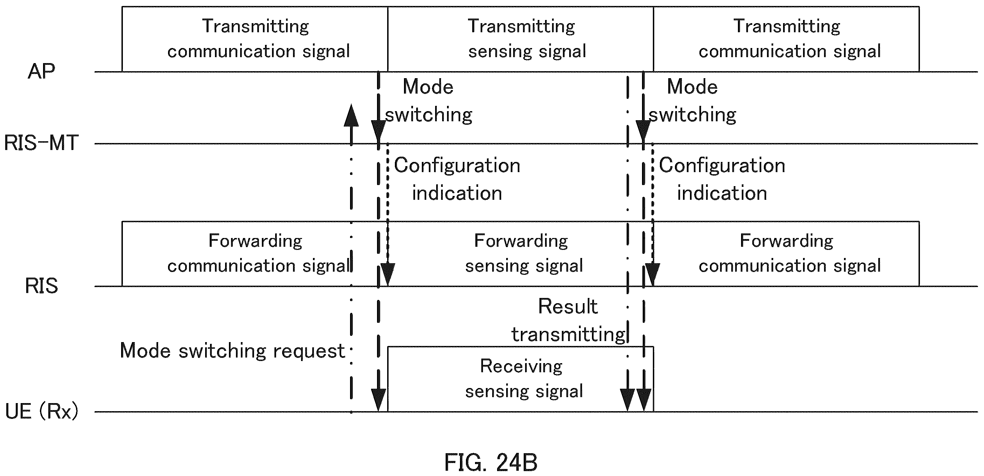

FIG. 24B is a diagram illustrating an example of the mode switching based on the indication on the trigger basis to the system including the RIS. FIG. 24B illustrates an example in which the mode is switched from the communication mode to the sensing mode and is switched from the sensing mode to the communication mode again. FIG. 24B illustrates a flow of signals or information of the AP, the RIS, the RIS-MT, and the receiver (Rx).

In the example of FIG. 24B, in the communication mode, the AP transmits a communication signal (communication signal in FIG. 24B), and the RIS performs processing of forwarding the communication signal. The AP may receive the communication signal, or in one communication mode section, the AP may perform both transmission and reception of the communication signal.

In the example of FIG. 24B, at the end of the communication mode, the UE requests the AP to switch the mode from the communication mode to the sensing mode. In other words, in a case where the request for the mode switching is made, the mode is switched from the communication mode to the sensing mode. The AP that acquires the request for the mode switching indicates the RIS-MT and the UE to switch the mode from the communication mode to the sensing mode. For example, the indication is performed by transmitting a control signal including control information for indicating the mode switching from the AP to the RIS-MT and the UE. The control information may include information on the configuration of the RIS and/or UE. The information on the configuration of the RIS and/or UE includes at least one of information on the selection of the transmitter (e.g., AP, RIS, and receiver (e.g., UE)), a relative spatial relationship, a sensing area, a granularity of the beam scanning, and control information (e.g., RTC) used by the RIS. For example, the RIS-MT indicates the configuration (Configuration) of the RIS based on the indication. For example, the RIS-MT indicates a change in a forwarding destination of the RIS, a change in a direction in which the RIS forwards the signal, a change in the control information (e.g., RTC) used by the RIS, and the like. The RIS that receives the indication performs the configuration based on the indication. Further, the UE may perform the configuration based on the control information.

In the example of FIG. 24B, the UE requests the AP to switch the mode, the AP indicates the RIS-MT to switch the mode, the RIS is configured, and the mode is switched from the communication mode to the sensing mode. After the switching to the sensing mode, the AP transmits a signal for sensing (sensing signal in FIG. 24B), and the RIS performs processing of fowarding the signal for sensing. The echo signal (echo signal in FIG. 24B) in which the signal for sensing is reflected by the target is received by the receiver. The AP may be configured to receive the echo signal.

As described above, in a case where the network side (e.g., AP) performs the sensing processing, information on the echo signal received by the UE may be transmitted to the network side. The network side that acquires the information on the echo signal performs the sensing processing to obtain the sensing result. In the example of FIG. 24B, at the end of the sensing mode, the AP transmits the sensing result to the UE. Then, the AP indicates the RIS-MT and the UE to switch the mode from the sensing mode to the communication mode. For example, the indication is performed by transmitting a control signal including control information for indicating the mode switching from the AP to the RIS-MT. The RIS-MT indicates the configuration (Configuration) of the RIS based on the indication. For example, the RIS-MT indicates a change in a direction in which the RIS forwards the signal, a change in the control information (e.g., the RTC) used by the RIS, and the like. The RIS that receives the indication performs the configuration based on the indication. The UE may perform the configuration based on the control information.

As described above, in FIG. 24B, the AP indicates the RIS-MT and the receiver to switch the mode, the RIS is configured, and the mode is switched from the sensing mode to the communication mode.

As described above, the system including the RIS achieves both sensing and communication by the mode switching to efficiently perform both sensing and communication. Further, since the system including the RIS achieves both sensing and communication without installing both a system for sensing and a system for communication, the installation cost can be reduced.

In FIGS. 24A and 24B, an example has been described in which the receiver receives the echo signal and does not receive the communication signal, but the present disclosure is not limited to this. The receiver of FIG. 24A and FIG. 24B may receive both the echo signal and the communication signal.

Further, in FIGS. 24A and 24B, a specific time may be required from the indication of the mode switching to the switching of the mode.

Further, in FIGS. 24A and 24B, a gap section for switching the mode may be provided between the communication mode and the sensing mode. In the gap section, an indication from the AP to the RIS-MT, a change in the configuration of the RIS, and the like may be performed. The gap section may be indicated from the AP, or the RIS-MT may report the gap section to the AP as a capability of the RIS.

Further, in the above, an example has been described in which there are two modes of the communication mode and the sensing mode, but the present disclosure is not limited to this. For example, one or more modes different from the communication mode and the sensing mode may be present. For example, in addition to the communication mode in which the AP and the UE perform communication, a mode in which the AP communicates with the RIS-MT may be present. Further, as illustrated in Proposal 1, the sensing mode may be divided into a sensing mode in the coarse beam scanning and a sensing mode in the fine beam scanning.

### <Example of Characteristics>

With the aid of the RIS, the sensing system including the RIS can realize wireless imaging of the posture and the gesture. Further, various imaging resolutions can be obtained according to various imaging requirements.

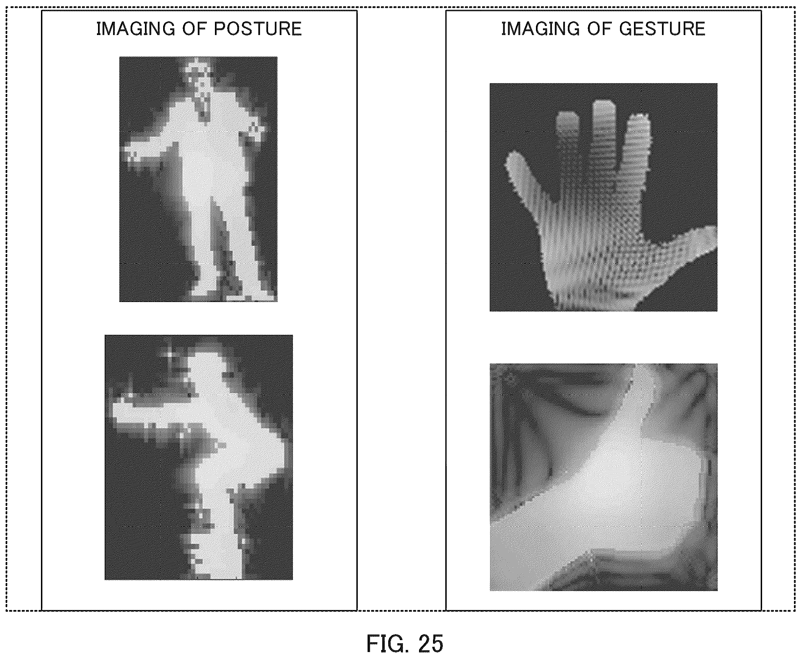

FIG. 25 is a diagram illustrating an example of wireless imaging. FIG. 25 illustrates an example of the imaging result of the posture or the gesture.

In the method described above, the resolution of the quantization of the phase shift of the RIS affects the resolution of the imaging. For example, in order to obtain a better imaging result, it is preferable that the resolution of the quantization of the phase shift is better.

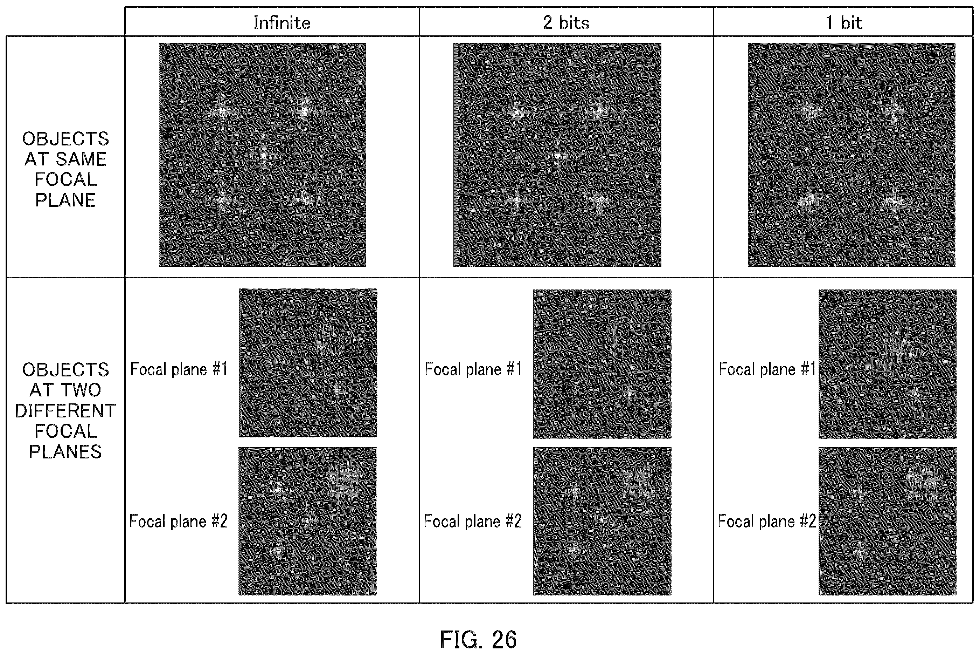

FIG. 26 is a diagram illustrating a relationship between the number of bits of the quantization of the phase shift and the imaging result. FIG. 26 illustrates a case where the resolution of the quantization is infinite, a case where the number of bits of the quantization is 2 bits, and a case where the number of bits of the quantization is 1 bit.

As illustrated in FIG. 26, in order to obtain a good imaging result, it is preferable that the RIS has a resolution (e.g., the number of bits) of the quantization of the phase shift of 2 bits or more.

Based on the imaging method described above, the resolution in the dimension of the distance (range dimension) (e.g., dimension of depth) can be achieved. For example, the method described above can effectively suppress the influence on the resolution of the imaging of the object at different focal planes.

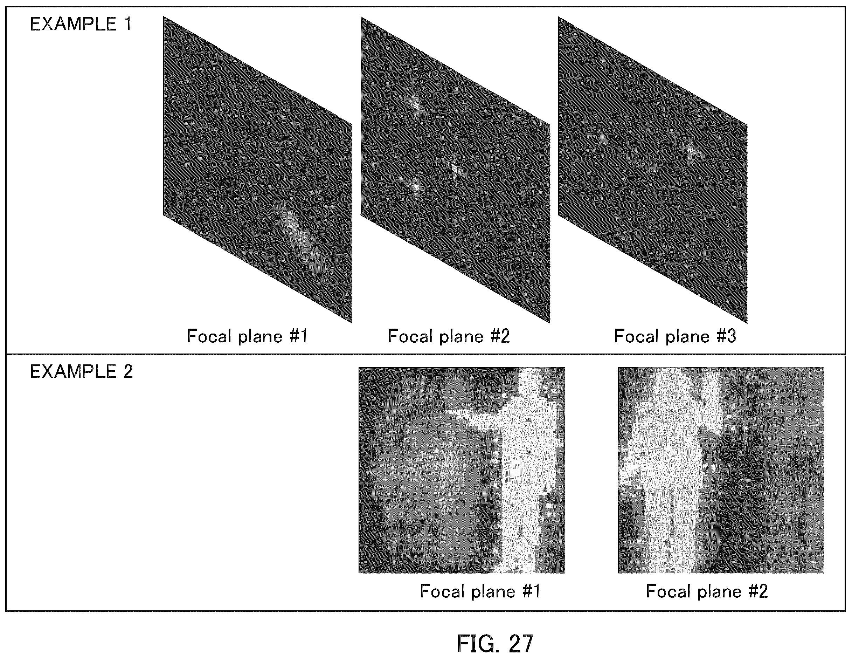

FIG. 27 is a diagram illustrating an imaging result at different focal planes. FIG. 27 illustrates a result of performing the imaging on two cases in which the focal planes are different as Examples 1 and 2. As illustrated in Examples 1 and 2 of FIG. 27, the images at different focal planes are represented in a distinguishable manner. Further, the influence from other focal planes is suppressed.

Next, an example of a processing time of the imaging in the method described above will be described. In the method described above, the imaging speed of 24 frames per second can be achieved. This value is a benchmark for the imaging of the high-speed security check.

In a millimeter wave frequency, the imaging accuracy at a centimeter level can be achieved by using an opening size within an allowable range.

Here, the time required for the imaging will be evaluated.

The switching time of a high-frequency switch (e.g., PIN switch) is about 100 ns. This is a time required for the beam to scan a point in space. In a case where it is assumed that the scan area is 1 m × 2 m and the size of each pixel is 5 mm × 5 mm, the total scan time T is T = {(1000 mm × 2000 mm)/(5 mm × 5 mm)} × 100 × 10⁻⁹s = 0.008s.

As an actual beam imaging method, the amount of calculation resources required for the back-end signal processing is minimized, and the signal processing time can be made very short. As a whole, as a result, the imaging speed is improved, and the rapid imaging detection can be performed.

Further, here, the characteristics of the opening size will be evaluated.

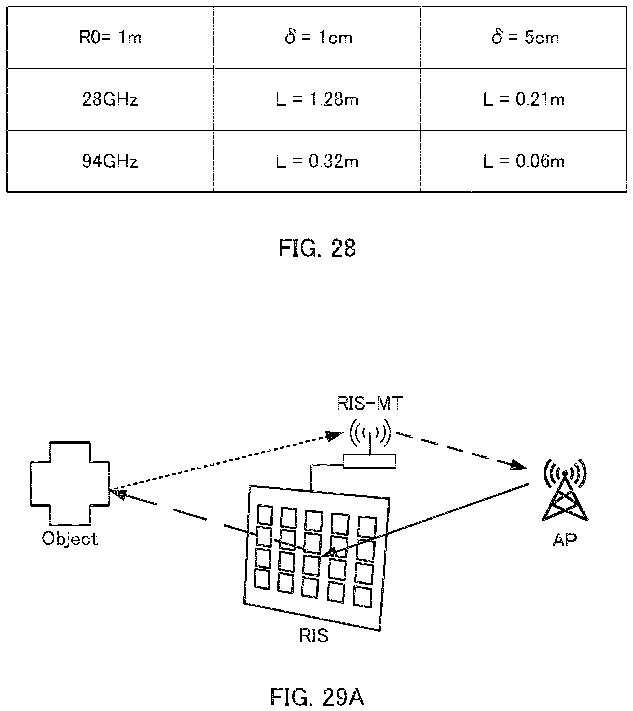

FIG. 28 is a table illustrating an example of the opening size. In FIG. 28, R0 represents a distance from the imaging target to the center of the RIS. δ represents the resolution of the sensing (or imaging). L represents a size (length of a side) of the opening of the RIS.

As illustrated in FIG. 28, the resolution at a centimeter level can be realized with an opening size of about 1 m at maximum.

### <Example of Installation>

### <Case 1: Echo signal is received by RIS-MT>

In Case 1, a case where an echo signal is received by the RIS-MT will be described. In this case, as a typical example, the introduced refractive RIS functions as a "window" for expanding the coverage and as an intrusion detection. In Case 1, the RIS-MT has the ability to receive a signal (e.g., echo signal). Further, in Case 1, the RIS-MT may have the ability to process the signal (e.g., echo signal).

Two options are considered for the difference in handling of the echo signal in the RIS-MT.

Option 1: The RIS-MT forwards the echo signal to the AP.

Option 2: The RIS-MT executes the imaging processing on the received echo signal and transmits the processing result to the AP. In the case of Option 2, the RIS-MT has the signal processing ability.

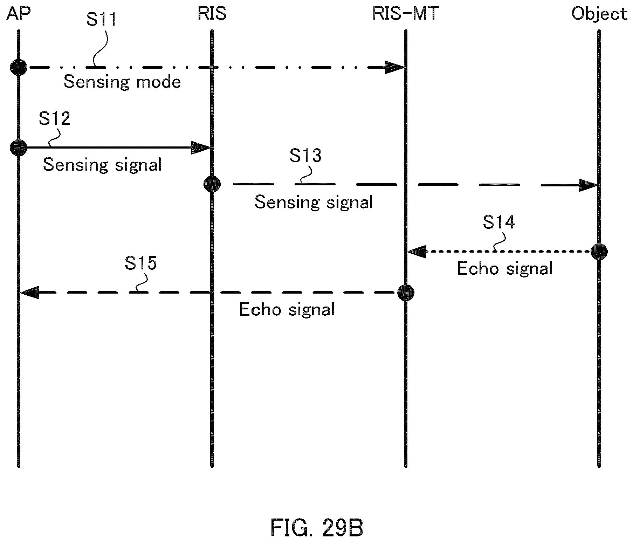

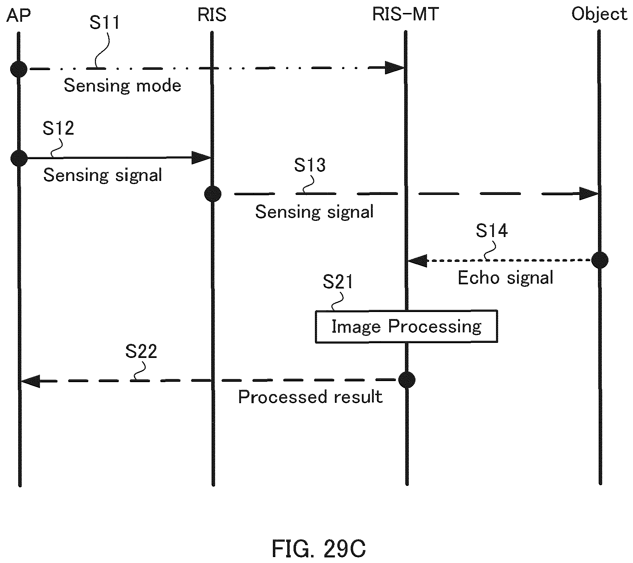

FIG. 29A is a diagram illustrating an example of an overview of a system of Case 1 of the installation. FIG. 29B is a sequence diagram illustrating an exchange of signals of Option 1 of Case 1 of the installation illustrated in FIG. 29A. FIG. 29C is a sequence diagram illustrating an exchange of signals of Option 2 of Case 1 of the installation illustrated in FIG. 29A.

FIG. 29A illustrates the AP, the RIS, the RIS-MT, and the target (object in FIG. 29A) in Case 1 of the installation, and illustrates a flow of signals.

FIG. 29B illustrates an exchange of signals of the AP, the RIS, the RIS-MT, and the target in a case of Option 1 in Case 1 of the installation illustrated in FIG. 29A.

As illustrated in FIG. 29B, the AP indicates the RIS-MT to be in the sensing mode (S11). Next, the AP transmits the signal for sensing (sensing signal in FIG. 29B) to the RIS (S12), and the RIS forwards the signal for sensing (S13). The forwarded signal for sensing is reflected by the object that is the target, and the echo signal after the reflection is received by the RIS-MT (S14). In Option 1, the RIS-MT forwards the echo signal to the AP (S15).

FIG. 29C illustrates an exchange of signals of the AP, the RIS, the RIS-MT, and the target in a case of Option 2 in Case 1 of the installation illustrated in FIG. 29A. In FIG. 29C, the same reference numerals are given to the same processing as in FIG. 29B, and the description thereof will be omitted.

In FIG. 29B, the RIS-MT forwards the echo signal to the AP, whereas in FIG. 29C, the RIS-MT performs the imaging processing on the echo signal (S21). Then, the RIS-MT transmits the processing result to the AP (S22).

### <Case 2: Echo signal is received by AP>

In Case 2, the echo signal is received by the AP. As a typical example, the RIS is introduced near a full-duplex AP. In Case 2, the full-duplex AP is used for the transmission and reception of the sensing signal and the echo signal.

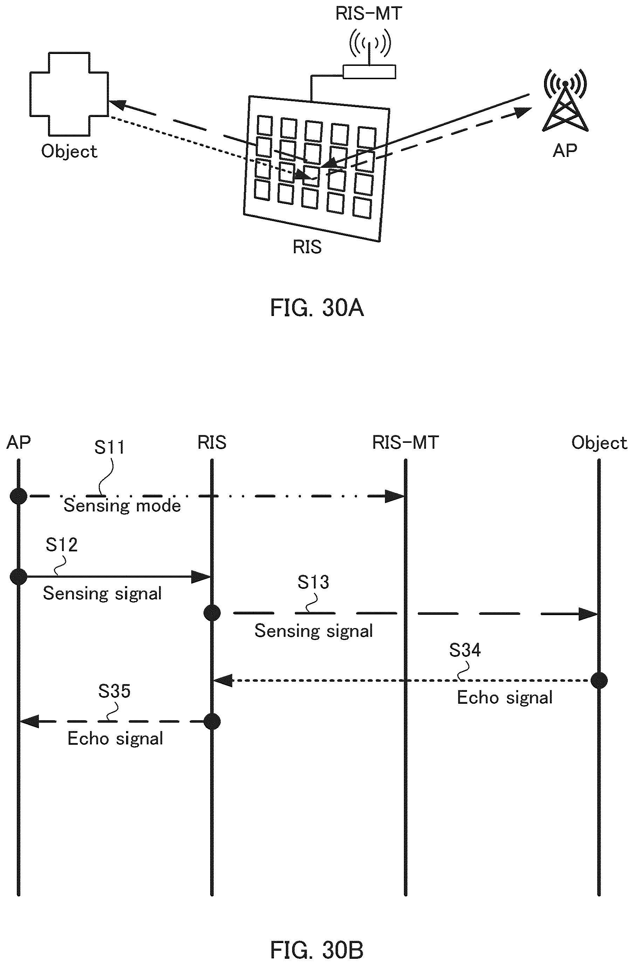

FIG. 30A is a diagram illustrating an example of an overview of a system of Case 2 of the installation. FIG. 30B is a sequence diagram illustrating a flow of signals of Case 2 of the installation illustrated in FIG. 30A.

FIG. 30A illustrates the AP, the RIS, the RIS-MT, and the target (object in FIG. 30A) in Case 2 of the installation, and illustrates a flow of signals. FIG. 30B illustrates an exchange of signals of the AP, the RIS, the RIS-MT, and the target in Case 2 of the installation illustrated in FIG. 30A. In FIG. 30B, the same reference numerals are given to the same processing as in FIG. 29B, and the description thereof will be omitted.

The processing up to S13 in FIG. 30B is the same as in FIG. 29B. In FIG. 30B, in S13, the signal for sensing forwarded by the RIS is reflected by the object that is the target, and the echo signal after the reflection reaches the RIS (S34). In Case 2, the RIS forwards the echo signal to the AP (S35).

In Case 2, as illustrated in FIGS. 30A and 30B, the echo signal is received by the full-duplex AP. Since the AP has the full-duplex function, both the transmission of the signal for sensing and the reception of the echo signal are processed by the AP.

In Case 2, by installing the RIS near the AP, a sufficient SNR can be secured for the echo signal, and the accuracy of the imaging can be improved.

### <Case 3: Echo signal is received by distributed AP>

In Case 3, the echo signal is received by the distributed AP. Case 3 is realized by distributed MIMO aided by the RIS as a typical example. In Case 3, one set of APs functions as a transmitter of the signal for sensing and a receiver of the echo signal.

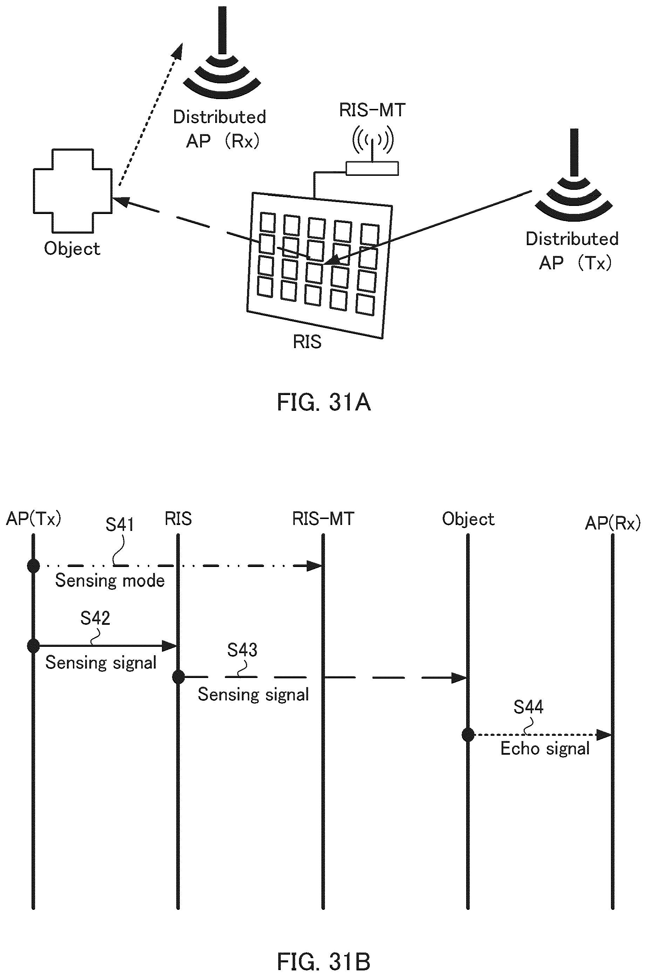

FIG. 31A is a diagram illustrating an example of an overview of a system of Case 3 of the installation. FIG. 31B is a sequence diagram illustrating a flow of signals of Case 3 of the installation illustrated in FIG. 31A.

FIG. 31A illustrates the distributed AP (AP (Tx) in FIG. 31A) that functions as a transmitter, the distributed AP (AP (Rx) in FIG. 31A) that functions as a receiver, the RIS, the RIS-MT, and the target (object in FIG. 31A) in Case 3 of the installation, and illustrates a flow of signals. FIG. 31B illustrates an exchange of signals of the distributed AP, the RIS, the RIS-MT, and the target in Case 3 of the installation illustrated in FIG. 31A.

As illustrated in FIG. 31B, the AP (Tx) indicates the RIS-MT to be in the sensing mode (S41). Next, the AP transmits the signal for sensing (sensing signal in FIG. 31B) to the RIS (S42), and the RIS forwards the signal for sensing (S43). The forwarded signal for sensing is reflected by the object that is the target, and the echo signal after the reflection is received by the AP (Rx) (S44).

As illustrated in FIGS. 31A and 31B, the echo signal is received by the distributed AP. According to Case 3, by using the distributed AP close to the target as the receiver of the echo signal, the path loss that reduces the SNR of the echo signal can be reduced, and the accuracy of the imaging can be improved.

### <Case 4: Echo signal is received by UE>

In Case 4, the echo signal is received by the UE. As a typical example, in Case 4, the RIS aids the UE by performing environmental sensing and/or fall detection. In Case 4, the UE determines a relative positional relationship with the RIS.

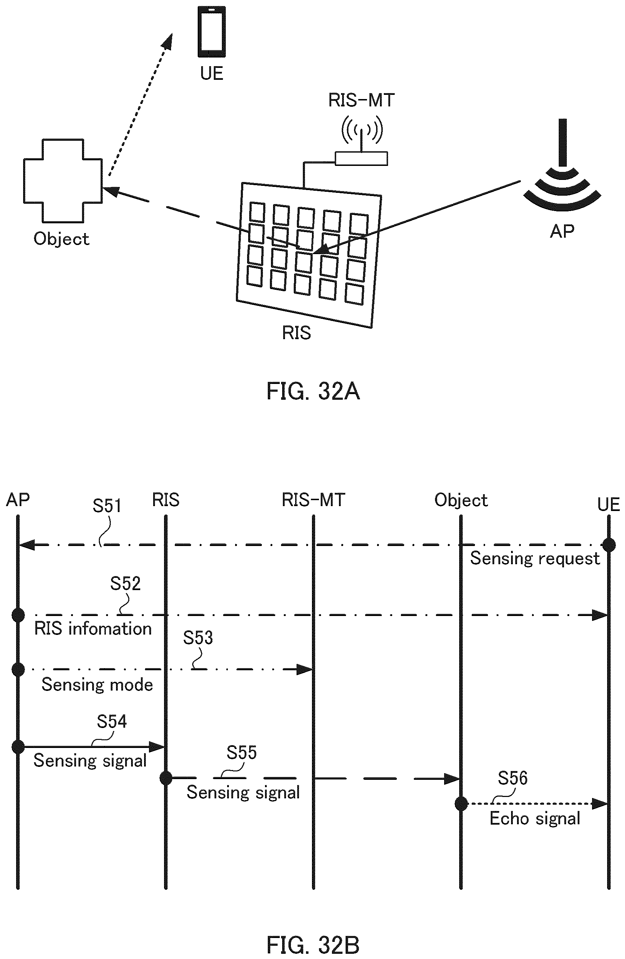

FIG. 32A is a diagram illustrating an example of an overview of a system of Case 4 of the installation. FIG. 32B is a sequence diagram illustrating a flow of signals of Case 4 of the installation illustrated in FIG. 32A.

FIG. 32A illustrates the AP that functions as a transmitter, the UE that functions as a receiver, the RIS, the RIS-MT, and the target (object in FIG. 32A) in Case 4 of the installation, and illustrates a flow of signals. FIG. 32B illustrates an exchange of signals of the AP, the UE, the RIS, the RIS-MT, and the target in Case 4 of the installation illustrated in FIG. 32A.

As illustrated in FIG. 32B, the UE requests the AP to perform the sensing (S51). The AP transmits information (RIS information in FIG. 32B) on the RIS to the UE (S52). The AP indicates the RIS-MT to be in the sensing mode (S53). Next, the AP transmits the signal for sensing (sensing signal in FIG. 32B) to the RIS (S54), and the RIS forwards the signal for sensing (S55). The forwarded signal for sensing is reflected by the object that is the target, and the echo signal after the reflection is received by the UE (S56).

As illustrated in FIGS. 32A and 32B, the echo signal is received by the UE. In Case 4, the UE determines the relative positional relationship between the RIS and the UE before performing the imaging processing. For example, in order to determine the positional relationship, the network (e.g., the AP) transmits the position information of the RIS to the UE.

The four cases described above may be fixed or may be dynamically switched in the system including the RIS. For example, any one of the four cases may be selected based on at least one of a position, a size, and a position of the Tx, the Rx, and the RIS to be selected of the target to be sensed by the system, and a capability of the Tx, the Rx, and the RIS, and the sensing may be performed based on the selected case. The capability of the Tx and the Rx may indicate at least one of whether the full-duplex is supported or whether the imaging processing is possible. Further, the capability of the RIS may indicate at least one of whether the imaging processing is possible, whether the coarse granularity grid division is supported and/or whether the fine granularity grid division is supported.

### <Relationship with Specification>

The embodiment described above may be described in the specification as follows.

### <Switching between RIS-aided Communication Mode and Sensing (imaging) Mode>

· The RIS can dynamically switch between the communication mode and the sensing (imaging) mode based on the indication. The indication includes the following information: indication of mode switching, selection of Tx node, RIS, and Rx node, and relative spatial relationship between Tx node, RIS, sensing (imaging) area, and Rx node.

Selection method of Tx node, RIS, and Rx node: the network indicates the AP or the UE as to whether to function as the Tx node and/or the Rx node for sensing. The RIS is indicated as to whether to function as a sensing assist node. The RIS is indicated as to whether to function as an Rx node for sensing.

Mode switching indication: the network indicates the RIS-MT to switch the mode between the communication mode and the sensing mode via control information of RRC/MAC CE/DCI or the like. In a case of the RIS, different codebooks may be used in the communication mode and the sensing mode. For example, in the sensing mode, the codebook illustrated in the present disclosure may be used, and in the communication mode, a codebook different from that of the present disclosure may be used. Alternatively, both the communication mode and the sensing mode may use the codebook generation of the above-described proposal, and different beam granularities may be used.

Relative spatial relationship: the network indicates the Tx node and the Rx node of the relative spatial relationship between the Tx node, the RIS, the sensing (imaging) area, and the Rx node. The relative spatial relationship is used to generate a codeword for forwarding/sending the sensing signal by the Tx node, and the Rx node uses the relative spatial relationship for image processing. For example, the network indicates the Tx node and the Rx node of the coordinates of the Tx node, the RIS, the sensing (imaging) area, and the Rx node.

### <Granularity Switching of RTC-based Beam Scanning>

The RIS uses the RTC in both a communication mode and a sensing (imaging) mode. Different beam granularities may be used in the communication mode and the sensing mode. The granularity of the RTC beam scanning is dynamically adjusted at various stages of the entire sensing (imaging) process.

The RTC uses coarse granularity grid division for a task such as rough positioning and/or posture detection of the target to effectively shorten the scanning time.

The RTC uses fine grid division for a task such as gesture recognition to improve the scanning accuracy.

Indication: the network indicates the RIS of the range of the target area and the granularity of the grid division.

The RIS may determine the coordinates of the target based on the "grid index" indicated by the network. The RIS determines a mapping between the coordinates and the "grid index" based on the range of the target area and the granularity of the grid division.

### <Functions of RIS-MT>

In a case where the functions of the RIS-MT are enhanced, such as receiving and processing the echo signal, the performance of the RIS-aided sensing (imaging) system can be further improved. In this case, the capability of the RIS-MT may be reported to the network.

### <RTC-Based Beam Scanning Granularity Switching>

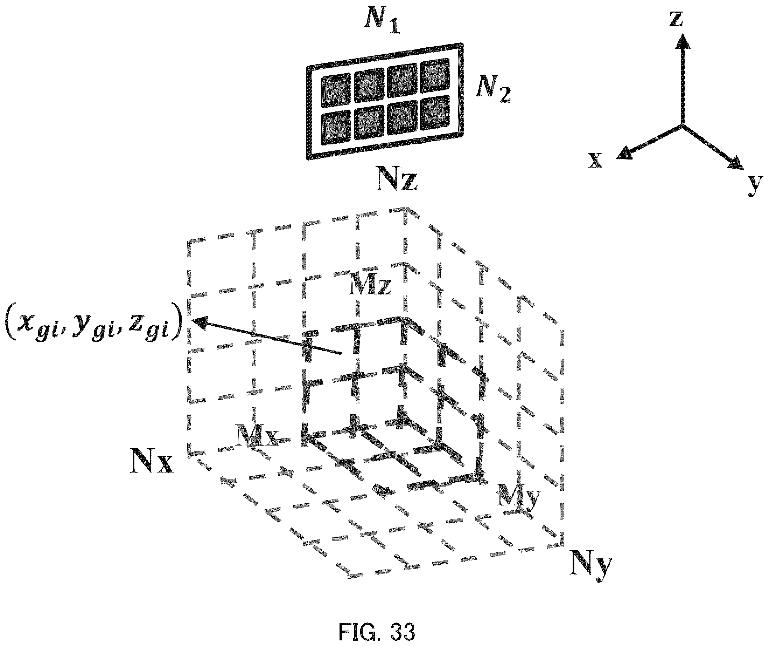

FIG. 33 is a diagram illustrating an example of a uniform grid RTC. FIG. 33 illustrates that a three-dimensional orthogonal space of x, y, and z is divided into Nx pieces in the x-axis direction, Ny pieces in the y-axis direction, and Nz pieces in the z-axis direction. Further, FIG. 33 illustrates that the RIS has N1 × N2 elements.

In Alt. 1, coefficient w (e.g., RTC) used for the RTC-based beam scanning is represented by the following Equation 19.
[20]$\begin{matrix}w = exp \left(-j2{πD}_{gi}\right) \\ {D}_{gi} \left({n}_{1}, {n}_{2}\right) = sqrt \left(\begin{matrix}{\left({x}_{gi}-\left(\left({n}_{1}-\frac{{N}_{1} + 1}{2}\right)\frac{λ}{2}+{x}_{0}\right)\right)}^{2} + {\left({y}_{gi}-{y}_{0}\right)}^{2} \\ + {\left({z}_{gi}-\left(\left({n}_{2}-\frac{{N}_{2} + 1}{2}\right)\frac{λ}{2}+{z}_{0}\right)\right)}^{2}\end{matrix}\right)\end{matrix}$ (Equation 19)

Further, in Alt. 2, the coefficient is represented by the following Equation 20.
[21]$\begin{matrix}w = \left({w}_{{N}_{1} , θ}⊗{w}_{{N}_{2} , φ}\right) ⊙ {w}_{D} \\ \left[{w}_{{N}_{1} , θ}\right] = exp \left(-{jπθn}_{1}\right) \\ \left[{w}_{{N}_{2} , φ}\right] = exp \left(-{jπφn}_{2}\right) \\ {w}_{D} = exp \left(-j2π\right. \\ ⋅ sqrt \left(\begin{matrix}{\left(\left({n}_{1}-\frac{{N}_{1} + 1}{2}\right)\frac{λ}{2}+{x}_{0}\right)}^{2} + {\left({y}_{gi}-{y}_{0}\right)}^{2} \\ + \left(\left({n}_{2}-\frac{{N}_{2} + 1}{2}\right){\left.\frac{λ}{2}+{z}_{0}\right)}^{2}\right)\end{matrix}\right) \\ {n}_{1} = 0 , 1 , … {N}_{1} - 1 \\ {n}_{2} = 0 , 1 , … {N}_{2} - 1 \\ θ = sin α cos v , φ = sin v\end{matrix}$ (Equation 20)

In the above expressions, (x_{0,} y_{0,}, z_{0,}) represents coordinates of a center point of the RIS. (x_{gi}, y _{gi}, z _{gi}) represents coordinates of an i-th grid center that can be acquired from the grid index. Further, here, α and ν represent physical angles of an azimuth angle and an elevation angle, respectively, and are acquired by coordinate transformation based on the coordinates of the elements of the RIS and the coordinates of the sensing (imaging) area.

### <Coordination between Tx, RIS, and Rx in Sensing (imaging) Mode>

In the sensing (imaging) mode, it is desirable to coordinate between the Tx, the RIS, and the Rx. The Tx transmits the sensing signal to the RIS, and the RIS forwards the sensing signal to scan the target region by beamforming. The received echo signal is collected by the Rx.

The following cases can be adopted for the coordination between the Tx, the RIS, and the Rx.

In Case 1, the RIS-MT functions as the Rx. In this case, the AP is selected as the Tx.

In Case 2, the AP functions as the Rx. In this case, the full-duplex AP is selected as both the Tx and the Rx.

In Case 3, the distributed AP functions as the Rx. In this case, one AP is selected as the Tx, and another AP is selected as the Rx. The network side needs to know the relative spatial relationship between the RIS and the AP (Rx).

In Case 4, the UE is the Rx. In this case, the AP needs to be selected as the Tx. The UE needs to recognize the relative spatial relationship between the RIS and the UE itself.

In Case 4, the control of the RIS by the UE as known as a UE-controlled RIS may be considered.

In Case 4, two options are considered.

In Option 1, the RIS is completely controlled by the UE. In this option, in both the communication mode and the sensing mode, the UE indicates the RIS of the control information. Further, in a case of the sensing, the UE indicates the RIS-MT of the mode switching indication, the selection of the RIS, and the indication to switch the granularity of the beam scanning via the sidelink control information. For example, the UE may indicate as in the indication of the network in the above.

In Option 2, both the network and the UE control the RIS. In this option, in the communication mode, the network indicates, to the RIS, the control information. In order to perform the sensing, the UE indicates the RIS of the mode switching indication, the selection of the RIS, and the indication to switch the granularity of the beam scanning.

The above-described matters may be defined in the present specification.

Further, in the above-described embodiment, an example in which one RIS is provided between the gNB and the UE has been described, but the present disclosure is not limited thereto. For example, a plurality of RISs may be provided between the gNB and the UE. For example, the first RIS may forward a signal transmitted by the gNB to the second RIS, and the second RIS may forward the signal to the UE. Further, in this case, the first RIS may generate a multi-beam (e.g., a multi-wide beam described above) to forward a signal to a plurality of second RISs, and each of the plurality of second RISs may further forward the signal to the UE.

Note that, in the present disclosure, "A/B" and "at least one of A and B" may be replaced with each other. Further, in the present disclosure, "A/B/C" may mean "at least one of A, B, and C".

In the present disclosure, notify, activate, deactivate, indicate, select, configure, update, determine, and the like may be replaced with each other. In the present disclosure, support, control, be able to control, operate, and be able to operate may be replaced with each other.

In the present disclosure, radio resource control (RRC), an RRC parameter, an RRC message, a higher layer parameter, a field, an information element (IE), a configuration, and the like may be replaced with each other. In the present disclosure, a medium access control (MAC) control element (CE), an update command, an activation/deactivation command, and the like may be replaced with each other.

In the present disclosure, higher layer signaling may be any of the following or a combination thereof: radio resource control (RRC) signaling, medium access control (MAC) signaling, broadcast information, another message (e.g., a message from a core network such as a positioning protocol (e.g., an NR positioning protocol A (NRPPa)/an LTE positioning protocol (LPP)) message), and the like.

In the present disclosure, MAC signaling may use, for example, a MAC control element (MAC CE) or a MAC protocol data unit (PDU). Broadcast information may be, for example, a master information block (MIB), a system information block (SIB), remaining minimum system information (RMSI), other system information (OSI), or the like.

In the present disclosure, physical layer signaling may be, for example, downlink control information (DCI), uplink control information (UCI), or the like.

In the present disclosure, an aperture, an antenna array, an array, a subarray (a plurality of antenna elements, a part of an array), a panel, an RIS, an RIS array, a scattering element array, and the like may be replaced with each other. In the present disclosure, an antenna, an antenna element, a scattering element, and the like may be replaced with each other.

In the present disclosure, an NCR, an RIS, an NCR including an RIS, a network node, an apparatus, an IAB, an IAB- mobile termination (MT), an IAB- distribution unit (DU), an IAB- central unit (CU), a terminal, a base station, a relay station, a relay apparatus, a repeater, a reflector, a transponder, an RIS-NCR, an RIS-type NCR, an extended NCR, and the like may be replaced with each other.

### <Block Configuration Diagram>

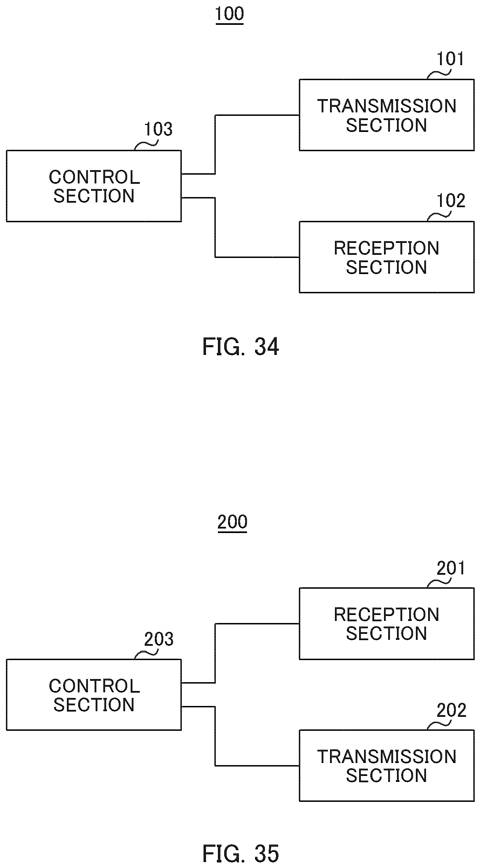

FIG. 34 is a block diagram illustrating a configuration example of base station 100 according to an embodiment of the present disclosure. Base station 100 includes, for example, transmission section 101, reception section 102, and control section 103. Base station 100 communicates with terminal 200 (see FIG. 35) by radio. Note that transmission section 101 and reception section 102 may be collectively referred to as a communication section. The control section may be referred to as a processing section, a processor, or the like.

Transmission section 101 transmits a DL signal to terminal 200. For example, transmission section 101 transmits the DL signal under the control of control section 103. For example, the DL signal may include information indicating scheduling related to signal transmission of terminal 200 (e.g., an UL grant), control information of a higher layer, or the like.

For example, transmission section 101 transmits various control signals (control signals of a higher layer or the like), reference signals, data signals, and the like to terminal 200 and/or radio apparatus 300 as the DL signal. Transmission section 101 transmits various signals, channels, configuration information, control information, and the like described in the above embodiment to terminal 200 as the DL signal, for example.

For example, transmission section 101 transmits information on the control of terminal 200 generated by control section 103 to terminal 200. Further, for example, transmission section 101 transmits information on the control of radio apparatus 300 generated by control section 103 to radio apparatus 300. Further, transmission section 101 transmits a data signal generated by control section 103 to terminal 200.

Reception section 102 receives a UL signal transmitted from terminal 200. For example, reception section 102 receives the UL signal under the control of control section 103. Further, reception section 102 may receive a UL signal transmitted from radio apparatus 300.

For example, reception section 102 receives a signal including terminal capability information (e.g., UE capability) of terminal 200, various control signals, reference signals, data signals, and the like from terminal 200 as the UL signal. Reception section 102 may also receive a signal including capability information (e.g., capability) of radio apparatus 300.

Control section 103 controls the overall (communication) operation of base station 100, including the transmission processing in transmission section 101 and the reception processing in reception section 102.

For example, control section 103 acquires information such as data and control information from a higher layer, and outputs the information to transmission section 101. Further, control section 103 outputs the data, control information, and/or the like received from reception section 102 to a higher layer.

For example, control section 103 allocates resources to be used for DL signal transmission and reception and/or resources to be used for UL signal transmission and reception, based on the signal (e.g., the data, the control information and/or the like) received from terminal 200 and/or the data, the control information and/or the like acquired from a higher layer. Information on the allocated resources may be included in control information to be transmitted to terminal 200.

Control section 103 executes operations other than the transmission and reception described in the above embodiment (note that the operations may be executed by transmission section 101 and/or reception section 102).

Further, control section 103 may generate control information related to a forwarding operation of radio apparatus 300. Control section 103 may transmit an indication (e.g., control information) related to communication control of radio apparatus 300 via transmission section 101.

FIG. 35 is a block diagram illustrating a configuration example of terminal 200 according to an embodiment of the present disclosure. Terminal 200 includes, for example, reception section 201, transmission section 202, and control section 203. Terminal 200 communicates with base station 100 (see FIG. 34) by radio, for example. Note that reception section 201 and transmission section 202 may be collectively referred to as a communication section.

Reception section 201 receives a DL signal transmitted from base station 100. For example, reception section 201 receives the DL signal under the control of control section 203.

For example, reception section 201 receives various control signals, reference signals, data signals, and the like from base station 100 as the DL signal. Reception section 201 receives various signals, channels, configuration information, control information, and the like described in the above embodiment from base station 100 as the DL signal, for example.

For example, reception section 201 receives a signal from base station 100.

Transmission section 202 transmits a UL signal to base station 100. For example, transmission section 202 transmits the UL signal under the control of control section 203.

For example, transmission section 202 transmits a signal including information on the processing capability of terminal 200, various control signals, reference signals, data signals, and the like to base station 100 as the UL signal.

Control section 203 controls the overall (communication) operation of terminal 200, including the reception processing in reception section 201 and the transmission processing in transmission section 202.

For example, control section 203 acquires information such as data and control information from a higher layer, and outputs the information to transmission section 202. Further, control section 203 outputs, for example, the data, the control information and/or the like received from reception section 201 to a higher layer.

Control section 203 executes operations other than the transmission and reception described in the above embodiment (note that the operations may be executed by reception section 201 and/or transmission section 202).

Note that a signal received by terminal 200 from base station 100 may be a signal directly transmitted from base station 100 or may be a signal transmitted from base station 100 and forwarded by radio apparatus 300. Further, a signal transmitted by terminal 200 to base station 100 may be directly received by base station 100 or may be forwarded by radio apparatus 300 and received by base station 100. In this case, terminal 200 need not recognize whether the signal is forwarded by radio apparatus 300.

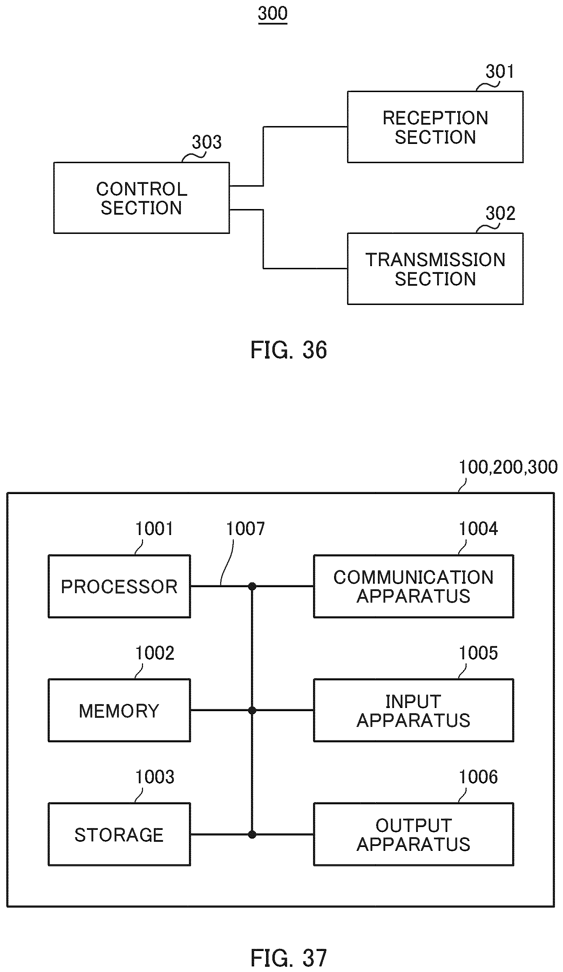

FIG. 36 is a block diagram illustrating a configuration example of radio apparatus 300 according to an embodiment of the present disclosure. Radio apparatus 300 corresponds to an example of the RIS. Radio apparatus 300 includes, for example, reception section 301, transmission section 302, and control section 303. Radio apparatus 300 communicates with base station 100 (see FIG. 34) and terminal 200 (see FIG. 35) by radio, for example. Note that reception section 301 and transmission section 302 may be collectively referred to as a communication section. The communication section may have a radiation surface (e.g., an RIS array) that radiates a radio wave, and may transmit a signal from the radiation surface or may receive a signal on the radiation surface.

Reception section 301 receives a DL signal transmitted from base station 100. Further, reception section 301 receives a UL signal transmitted from terminal 200. For example, reception section 301 receives the DL signal and the UL signal under the control of control section 303. Note that the received signal may include a signal addressed to base station 100, a signal addressed to terminal 200, and a signal addressed to radio apparatus 300. For example, reception section 301 receives a signal transmitted from base station 100 to terminal 200 (e.g., a signal specific to terminal 200). Note that forwarding processing may include at least one of processing of transmitting, to terminal 200, a signal that is received from base station 100 and addressed to terminal 200 and processing of receiving a signal addressed to base station 100 from terminal 200.

Transmission section 302 transmits, to base station 100, the UL signal that is received from terminal 200 and addressed to base station 100. Further, transmission section 302 transmits, to terminal 200, the DL signal that is received from base station 100 and addressed to terminal 200. For example, transmission section 302 transmits the UL signal under the control of control section 303. For example, transmission section 302 forwards, to terminal 200, the signal that is received from base station 100 and addressed to terminal 200.

Control section 303 controls the overall (communication) operation of radio apparatus 300, including the reception processing in reception section 301 and the transmission processing in transmission section 302.

For example, control unit 303 configures any one of a first beam (e.g., a beam for coarse beam scanning) that performs scanning with a first granularity or a second beam (e.g., a beam for fine beam scanning) that performs scanning with a second granularity finer than the first granularity. In this case, the RIS array (an example of the antenna unit) forms a beam and forwards the signal based on the configuration of control unit 303.

Further, for example, control unit 303 performs configuration of switching between a first mode (e.g., a sensing mode) in which sensing is performed on a sensing region and a second mode (e.g., a communication mode) in which a signal is transmitted from a transmission apparatus (e.g., base station 100) to a reception apparatus (e.g., terminal 200). In this case, the RIS array (an example of the antenna unit) forwards the signal based on the mode configured by the control unit.

Control section 303 executes operations other than the transmission and reception described in the above embodiment (note that the operations may be executed by reception section 301 and/or transmission section 302).

Note that radio apparatus (e.g., the RIS) 300 in the present disclosure may be an example of a communication apparatus. Further, radio apparatus 300 in the present disclosure may be referred to by another name, such as a relay apparatus, a forwarding apparatus or a relay apparatus. Further, radio apparatus 300 in the present disclosure may be replaced with terminal 200 (e.g., UE). For example, radio apparatus 300 may be regarded as terminal 200 having a forwarding function (or a relay function).

The present disclosure has been described, thus far. Note that the division of the items in the above description is not essential to the present disclosure, and matters described in two or more items may be used in combination as necessary, and matters described in one item may be applied to matters described in another item (as long as they do not contradict each other).

### <Hardware Structure>

Note that the block diagrams that have been used to describe the above embodiments illustrate blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (e.g., via wire, radio, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

For example, a base station, a terminal, a radio apparatus, and so on according to one embodiment of the present disclosure may function as a computer that executes the processes of the radio communication method of the present disclosure. FIG. 37 is a diagram to illustrate an example of a hardware structure of a base station, a terminal, and a radio apparatus according to an embodiment of the present disclosure. Physically, the above-described base station 100, terminal 200, and radio apparatus 300 may each be formed as a computer apparatus that includes processor 1001, memory 1002, storage 1003, communication apparatus 1004, input apparatus 1005, output apparatus 1006, bus 1007, and so on.

Note that in the present disclosure, the words such as an apparatus, a circuit, a device, a section, a unit, and so on can be interchangeably interpreted. The hardware structure of base station 100, terminal 200, and radio apparatus 300 may be configured to include one or more of apparatuses illustrated in the drawings, or may be configured not to include part of apparatuses.

Each function of base station 100, terminal 200, and radio apparatus 300 is implemented, for example, by allowing certain software (programs) to be read on hardware such as processor 1001 and memory 1002, and by allowing processor 1001 to perform calculations to control communication via communication apparatus 1004 and control at least one of reading and writing of data in memory 1002 and storage 1003.

Processor 1001 controls the whole computer by, for example, running an operating system. Processor 1001 may be configured with a central processing unit (CPU), which includes interfaces with peripheral apparatus, control apparatus, computing apparatus, a register, and so on. For example, at least part of above-described control section 103, control section 203, control section 303, and so on may be implemented by processor 1001.

Furthermore, processor 1001 reads programs (program codes), software modules, data, and so on from at least one of storage 1003 and communication apparatus 1004, into memory 1002, and executes various processes according to these. As for the programs, programs to allow computers to execute at least part of the operations of the above-described embodiments are used. For example, control section 203 of terminal 200 may be implemented by control programs that are stored in memory 1002 and that operate on processor 1001, and other functional blocks may be implemented likewise. The various processes have been described to be performed by single processor 1001. However, the processes may be performed by two or more processors 1001 simultaneously or sequentially. Processor 1001 may be implemented by one or more chips. It should be noted that the program may be transmitted from a network via a telecommunication line.

Memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. Memory 1002 may be referred to as a "register," a "cache," a "main memory (primary storage apparatus)" and so on. Memory 1002 can store executable programs (program codes), software modules, and the like for implementing the radio communication method according to one embodiment of the present disclosure.

Storage 1003 is a computer-readable recording medium, and may be constituted with, for example, at least one of a flexible disk, a floppy (registered trademark) disk, a magneto-optical disk (e.g., a compact disc (Compact Disc ROM (CD-ROM) and so on), a digital versatile disc, a Blue-ray (registered trademark) disk), a removable disk, a hard disk drive, a smart card, a flash memory device (e.g., a card, a stick, and a key drive), a magnetic stripe, a database, a server, and other appropriate storage media. Storage 1003 may be referred to as "auxiliary storage apparatus." The above recording medium may be a database including memory 1002 and/or storage 1003, a server, or any other appropriate medium.

Communication apparatus 1004 is hardware (transmitting/receiving device) for allowing inter-computer communication via at least one of wired and radio networks, and may be referred to as, for example, a "network device," a "network controller," a "network card," a "communication module," and so on. Communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmission section 101, reception section 102, reception section 201, transmission section 202, reception section 301, transmission section 302 and the like, may be realized by communication apparatus 1004.

Input apparatus 1005 is an input device that receives input from the outside (e.g., a keyboard, a mouse, a microphone, a switch, a button, a sensor, and so on). Output apparatus 1006 is an output device that allows sending output to the outside (e.g., a display, a speaker, a Light Emitting Diode (LED) lamp, and so on). Note that input apparatus 1005 and output apparatus 1006 may be provided in an integrated structure (e.g., a touch panel).

Furthermore, these types of apparatus, including processor 1001, memory 1002, and others, are connected by bus 1007 for communicating information. Bus 1007 may be formed with a single bus, or may be formed with buses that vary between pieces of apparatus.

Also, base station 100, terminal 200, and radio apparatus 300 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### <Notification and Signaling of Information>

Notification of information is by no means limited to the embodiments described in the present disclosure, and other methods may be used as well. For example, notification of information in the present disclosure may be implemented by using physical layer signaling (e.g., downlink control information (DCI), uplink control information (UCI)), higher layer signaling (e.g., Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

### <Application System>

The embodiments illustrated in the present disclosure may be applied to Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New Radio (NR), New radio access (NX), Future generation radio access (FX), W-CDMA (registered trademark), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (e.g., a combination of LTE or LTE-A and 5G, and the like) for application.

### <Processing Procedure and the like>

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

### <Operation of Base Station>

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (e.g., Mobility Management Entities (MMEs), Serving-Gateways (S-GWs), and so on may be possible, but these are not limiting) other than base stations, or combinations of these. According to the above, a case is described in which there is a single network node other than the base station. However, a combination of multiple other network nodes may be considered (e.g., MME and S-GW).

### <Direction of Input and Output>

The information or signals described in this disclosure may be output from a higher layer (or lower layer) to a lower layer (or higher layer). The information or signals may be input or output through multiple network nodes.

### <Handling of Input and Output Information and the like>

The input or output information may be stored in a specific location (e.g., memory) or managed using management tables. The input or output information may be overwritten, updated, or added. The information that has been output may be deleted. The information that has been input may be transmitted to another apparatus.

### <Determination Method>

A decision or a determination in an embodiment of the present invention may be realized by a value (0 or 1) represented by one bit, by a boolean value (true or false), or by comparison of numerical values (e.g., comparison with a predetermined values).

### <Variations and the like of Aspects>

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### <Software>

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or radio technologies (infrared, microwave, etc.), at least one of these wired line technologies or radio technologies is included within the definition of the transmission medium.

### <Information and Signals>

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

### <System and Network>

As used in the present disclosure, the terms "system" and "network" are used interchangeably.

### <Names of Parameters and Channels>

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

### <Base Station>

In the present disclosure, the terms such as a "base station (BS)," a "radio base station," a "fixed station," a "NodeB," an "eNB (eNodeB)," a "gNB (gNodeB)," an "access point," a "transmission point," a "reception point," a "transmission/reception point," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (e.g., three) cells. When a base station accommodates a plurality of cells, the entire coverage area of the base station can be partitioned into multiple smaller areas, and each smaller area can provide communication services through base station subsystems (e.g., indoor small base stations (Remote Radio Heads (RRHs))). The term "cell" or "sector" refers to part of or the entire coverage area of at least one of a base station and a base station subsystem that provides communication services within this coverage. In the present disclosure, the transmission of information from the base station to the terminal may be replaced with the base station indicating the terminal to perform control and operation based on the information.

### <Mobile Station>

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

### <Base Station/Mobile Station>

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on. The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (e.g., a car, an airplane, and the like), may be a moving object which moves unmanned (e.g., a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a terminal. For example, an embodiment of the present disclosure may be applied to the structure that replaces a communication between a base station and a terminal with a communication between a plurality of terminals (e.g., which may be referred to as "Device-to-Device (D2D)," "Vehicle-to-Everything (V2X)," and the like). In this case, terminal 200 and radio apparatus 300 may have the functions of base station 100 described above. The words such as "uplink" and "downlink" may be interpreted as the words corresponding to the terminal-to-terminal communication (e.g., "sidelink"). For example, an uplink channel, a downlink channel and so on may be interpreted as a sidelink channel.

Likewise, the terminal in the present disclosure may be interpreted as base station. In this case, base station 100 and relay station 300 may have the functions of terminal 20 described above.

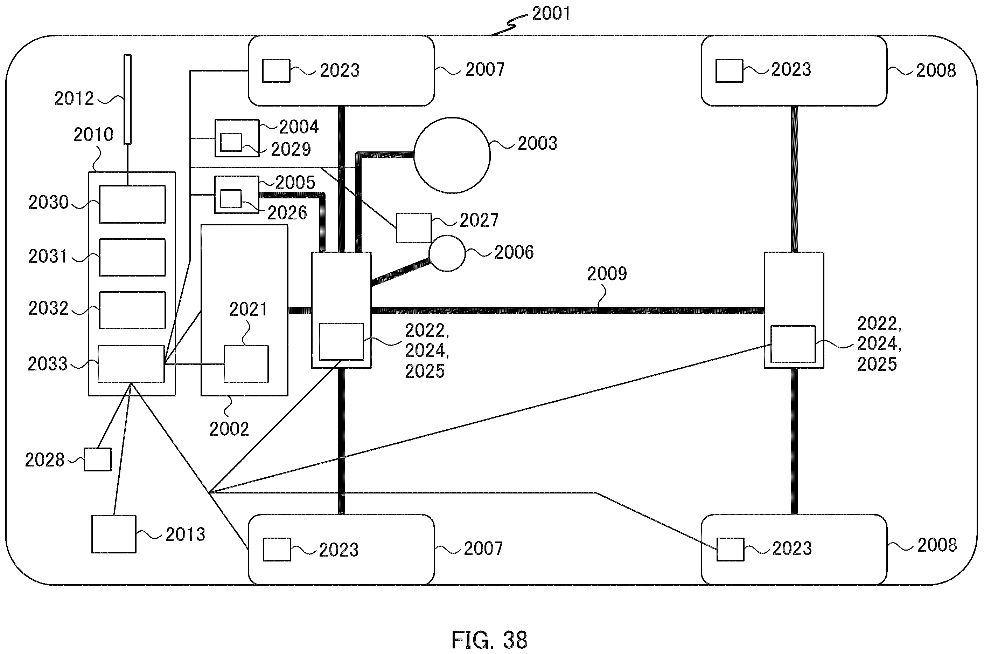

FIG. 38 illustrates a configuration example of vehicle 2001. As illustrated in FIG. 38, vehicle 2001 includes drive unit 2002, steering unit 2003, accelerator pedal 2004, brake pedal 2005, shift lever 2006, front wheel 2007, rear wheel 2008, axle 2009, electronic control unit 2010, various sensors 2021 to 2029, information service unit 2012, and communication module 2013. The aspects/embodiments described in the present disclosure may be applied to a communication device mounted in vehicle 2001, and may be applied to, for example, communication module 2013.

Drive unit 2002 may include, for example, an engine, a motor, and a hybrid of an engine and a motor. Steering unit 2003 includes at least a steering wheel and is configured to steer at least one of the front wheel or the rear wheel, based on the operation of the steering wheel operated by the user.

Electronic control unit 2010 includes microprocessor 2031, memory (ROM, RAM) 2032, and communication port (IO port) 2033. Electronic control unit 2010 receives signals from the various sensors 2021 to 2029 provided in vehicle 2001. Electronic control unit 2010 may be referred to as an ECU (Electronic control unit).

Signals from various sensors 2021 to 2029 include a current signal from current sensor 2021 which senses the current of the motor, a front or rear wheel rotation signal acquired by revolution sensor 2022, a front or rear wheel pneumatic signal acquired by pneumatic sensor 2023, a vehicle speed signal acquired by vehicle speed sensor 2024, an acceleration signal acquired by acceleration sensor 2025, a stepped-on accelerator pedal signal acquired by accelerator pedal sensor 2029, a stepped-on brake pedal signal acquired by brake pedal sensor 2026, an operation signal of a shift lever acquired by shift lever sensor 2027, and a detection signal, acquired by object detection sensor 2028, for detecting an obstacle, a vehicle, a pedestrian, and the like.

Information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

Information service unit 2012 may include an input device (e.g., a keyboard, a mouse, a microphone, a switch, a button, a sensor, a touch panel, and the like) for receiving input from the outside, or may include an output device (e.g., a display, a speaker, an LED lamp, a touch panel, and the like) for implementing output to the outside.

Driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. Further, driving support system unit 2030 transmits and receives various types of information via communication module 2013 to realize a driving support function or an autonomous driving function.

Communication module 2013 may communicate with microprocessor 2031 and components of vehicle 2001 via a communication port. For example, communication module 2013 transmits and receives data via communication port 2033, to and from drive unit 2002, steering unit 2003, accelerator pedal 2004, brake pedal 2005, shift lever 2006, front wheel 2007, rear wheel 2008, axle 2009, microprocessor 2031 and memory (ROM, RAM) 2032 in electronic control unit 2010, and sensors 2021 to 29 provided in vehicle 2001.

Communication module 2013 is a communication device that can be controlled by microprocessor 2031 of electronic control unit 2010 and that is capable of communicating with external devices. For example, various kinds of information are transmitted to and received from external devices through radio communication. Communication module 2013 may be internal to or external to electronic control unit 2010. The external devices may include, for example, a base station, a mobile station, or the like.

Communication module 2013 may transmit at least one of signals from various sensors 2021 to 2029 described above input to electronic control unit 2010, information obtained based on the signals, and information based on an input from the outside (a user) obtained via information service unit 2012, to the external apparatus via radio communication. Electronic control unit 2010, various sensors 2021 to 2029, information service unit 2012, and the like may be referred to as input units that receive input. For example, the PUSCH transmitted by communication module 2013 may include information based on the input.

Communication module 2013 receives various types of information (traffic information, signal information, inter-vehicle information, etc.) transmitted from the external devices and displays the received information on information service unit 2012 provided in vehicle 2001. Information service unit 2012 may be referred to as an output unit that outputs information (e.g., outputs information to devices, such as a display and a speaker, based on the PDSCH received by communication module 2013 (or data/information decoded from the PDSCH)).

Further, communication module 2013 stores the various types of information received from the external devices in memory 2032 available to microprocessor 2031. Based on the information stored in memory 2032, microprocessor 2031 may control drive unit 2002, steering unit 2003, accelerator pedal 2004, brake pedal 2005, shift lever 2006, front wheel 2007, rear wheel 2008, axle 2009, sensors 2021 to 2029 etc., mounted in vehicle 2001.

### <Meaning and Interpretation of Terms>

As used herein, the term "determining" may encompass a wide variety of actions. For example, "determining" may be regarded as judging, calculating, computing, processing, deriving, investigating, looking up or search inquiry (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Also, "determining" may be replaced with "assuming," "expecting," "considering," and the like.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

### <Reference Signal>

A reference signal may be abbreviated as an "RS," and may be referred to as a "pilot" and so on, depending on which standard applies.

### <Meaning of "Based On">

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

### <"First" and "Second">

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

### <Means>

"Means" included in the configuration of each of the above apparatuses may be replaced by "parts," "circuits," "devices," etc.

### <Open Form>

In the case where the terms "include," "including" and variations thereof are used in the present disclosure, these terms are intended to be comprehensive in the same way as the term "comprising." Further, the term "or" used in the present specification is not intended to be an "exclusive or."

### <Time Units such as TTI, Frequency Units such as RB, and Radio Frame Configuration>

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (e.g., 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a "Transmission Time Interval (TTI)," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (e.g., 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (e.g., the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (e.g., a normal TTI, a subframe, or the like) may be interpreted as a TTI having a time length exceeding 1 ms, and a short TTI (e.g., a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

### <Maximum Transmit Power>

The "maximum transmit power" described in the present disclosure may mean a maximum value of the transmit power, the nominal UE maximum transmit power, or the rated UE maximum transmit power.

### <Article>

In the present disclosure, where an article is added by translation, for example "a," "an," and "the," the disclosure may include that the noun following these articles is plural.

### <"Different">

In this disclosure, the term "A and B are different" may mean "A and B are different from each other." It should be noted that the term "A and B are different" may mean "A and B are different from C." Terms such as "separated" or "combined" may be interpreted in the same way as the above-described "different."

### Industrial Applicability

An aspect of the present disclosure is useful for radio communication systems.

### Reference Signs List

10 Radio communication system
20 NG-RAN
100 Base station (gNB)
200 Terminal (UE)
300 Radio apparatus (RIS)
101, 202, 302 Transmission section
102, 201, 301 Reception section
103, 203, 303 Control section
101 Processor
1002 Memory
1003 Storage
1004 Communication apparatus
1005 Input apparatus
1006 Output apparatus
1007 Bus

## Claims

1. A relay apparatus, comprising:
a control section that performs a configuration of switching between a first mode in which sensing is performed on a sensing region and a second mode in which a signal is transmitted from a transmission apparatus to a reception apparatus; and
an antenna section that forwards a signal based on a mode of the configuration performed by the control section.

2. The relay apparatus according to claim 1, wherein, the control section performs the configuration based on an indication from the transmission apparatus.

3. The relay apparatus according to claim 2, wherein, the indication is provided periodically.

4. The relay apparatus according to claim 1, wherein, the control section performs a configuration of switching to the first mode based on a request from a processing apparatus that receives the signal and performs processing on the sensing in the first mode.

5. A radio system, comprising:
a transmission apparatus; and
a relay apparatus, wherein,
the transmission apparatus includes a transmission section that transmits a signal toward the relay apparatus, and
the relay apparatus includes,
a control section that performs a configuration of switching between a first mode in which sensing is performed on a sensing region and a second mode in which a signal is transmitted from a transmission apparatus to a reception apparatus; and
an antenna section that forwards the signal based on a mode of the configuration performed by the control section.

6. A relay method, comprising:
performing, by a relay apparatus, a configuration of switching between a first mode in which sensing is performed on a sensing region and a second mode in which a signal is transmitted from a transmission apparatus to a reception apparatus; and
forwarding, by the relay apparatus, a signal based on a mode of the configuration performed.
